(19) Europäisches Patentamt
European Patent Office
Office européen des brevets

(11) **EP 4 556 527 A1**

(12) **EUROPEAN PATENT APPLICATION**
published in accordance with Art. 153(4) EPC

(43) Date of publication:
**21.05.2025 Bulletin 2025/21**

(21) Application number: **23839711.1**

(22) Date of filing: **14.07.2023**

(51) International Patent Classification (IPC):
*C08L 77/00* (2006.01)    *B29B 9/14* (2006.01)
*B29B 9/16* (2006.01)    *C08J 3/20* (2006.01)
*C08J 5/04* (2006.01)    *C08K 7/14* (2006.01)
*C08K 7/20* (2006.01)    *C08L 67/00* (2006.01)
*C08L 77/06* (2006.01)    *C08L 101/12* (2006.01)
*F16C 33/20* (2006.01)    *F16H 55/06* (2006.01)

(52) Cooperative Patent Classification (CPC):
**B29B 9/14; B29B 9/16; C08J 3/20; C08J 5/04;
C08K 7/14; C08K 7/20; C08L 67/00; C08L 77/00;
C08L 77/06; C08L 101/12; F16C 33/20; F16H 55/06**

(86) International application number:
**PCT/JP2023/026115**

(87) International publication number:
**WO 2024/014544 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.07.2022 JP 2022113784
29.07.2022 JP 2022122261
14.10.2022 JP 2022165824**

(71) Applicant: **Asahi Kasei Kabushiki Kaisha
Tokyo 1000006 (JP)**

(72) Inventors:
• **NAKAHARA, Ayaka
Tokyo 100-0006 (JP)**
• **KURIHARA, Tetsuo
Tokyo 100-0006 (JP)**

(74) Representative: **Hoffmann Eitle
Patent- und Rechtsanwälte PartmbB
Arabellastraße 30
81925 München (DE)**

(54) **FIBER-REINFORCED POLYAMIDE RESIN COMPOSITION, MOLDED ARTICLE, SLIDING MEMBER, GEAR, WORM WHEEL, AND METHOD FOR MANUFACTURING THERMOPLASTIC RESIN COMPOSITION**

(57)    The fiber-reinforced polyamide resin composition of the present invention contains a crystalline polyamide (A1) and glass fibers (B1), wherein the formic acid-relative viscosity of the fiber-reinforced polyamide resin composition is 90 or higher, the insoluble content when the fiber-reinforced polyamide resin composition is dissolved in formic acid is 105% by mass or higher relative to the ash content of the fiber-reinforced polyamide resin composition, and within the glass fibers (B1) contained in the fiber-reinforced polyamide resin composition, the proportion of glass fibers having a fiber length of 250 $\mu$m or less is not more than 55%.

EP 4 556 527 A1

**Description**

TECHNICAL FIELD

Priority is claimed on Japanese Patent Application No. 2022-113784, filed July 15, 2022, Japanese Patent Application No. 2022-122261, filed July 29, 2022, and Japanese Patent Application No. 2022-165824, filed October 14, 2022, the contents of which are incorporated herein by reference.

The present invention relates to a fiber-reinforced polyamide resin composition having excellent wear characteristics and mechanical characteristics, and a molded article formed from the composition, and more specifically relates to a fiber-reinforced polyamide resin composition containing a polyamide having a specific viscosity and glass fibers having a specific composition, and a molded article, a sliding member, a gear and a worm wheel formed from the composition.

Further, the present invention also relates to a method for manufacturing a thermoplastic resin composition.

Polyamide resins exhibit excellent sliding properties, moldability, mechanical characteristics and chemical resistance, and have conventionally been widely used as various component materials for industrial materials, vehicles, electrical and electronic components and industrial components.

Because of their particularly superior sliding properties and mechanical characteristics, polyamide resins are also widely used as sliding members such as vehicle gears and worms.

In order to further enhance these properties, compositions which use a polyamide having a higher viscosity than usual, and composite compositions containing an inorganic compound filler such as glass fibers, glass flakes, alumina fibers or a layered inorganic compound are currently under investigation.

Among such compositions, glass fiber-reinforced polyamide resin compositions containing a high-molecular weight polyamide and using glass fibers as the inorganic compound filler exhibit particular improvements in the sliding properties and mechanical characteristics, and are therefore attracting considerable attention.

On the other hand, in terms of reducing the weight of vehicles from the viewpoint of environmental considerations, reductions in the size of sliding members such as vehicle gears and worms are preferable. Accordingly, increasing the durability of the materials used as sliding members and reducing variations in the physical properties of small members would also be preferable.

In terms of glass fiber-reinforced polyamide resin compositions containing a high-molecular weight polyamide composition, Patent Documents 1 and 2, for example, disclose compositions in which by blending specific glass fibers and a coupling agent, the sliding properties, mechanical characteristics and productivity of the composition are able to be improved.

On the other hand, in recent years, demand has continued to increase for resin compositions containing a resin component of higher molecular weight in order to enhance the performance of various machinery or components.

Examples of methods used for obtaining high-molecular weight resin compositions include methods in which a resin of high molecular weight is melt-kneaded using an extruder, methods of increasing the molecular weight by first subjecting a resin of low molecular weight to melt-kneading in an extruder to obtain pellets, and subsequently conducting a heating step (hereinafter sometimes referred to as a "solid-phase polymerization").

Patent Document 3 discloses a nylon 66 continuous solid-phase polymerization method in which nylon 66 chips that have been crystallized such that the crystallinity degree of the chip surfaces is at least 11% flow down in layer-like form, while the chips are heated to 150 to 200°C using an inert gas supplied as a counter-current from below, thereby achieving solid-phase polymerization of the chips.

Patent Document 4 discloses a method for manufacturing polyamide resin chips in which following a solid-phase polymerization step in which raw material polyamide resin chips are allowed to accumulate under free fall while an inert gas is fed as a counterflow against the movement of the raw material polyamide resin chips, the polyamide resin chips are cooled under an inert gas in a cooling zone, and during this cooling process, operations are conducted to correct the dew point of the inert gas and maintain the moisture content of the polyamide resin chips within a prescribed range.

Patent Document 5 discloses reinforced polyamide resin pellets containing a polyamide resin having a melting point within a range from 200 to 270°C, and at least one type of inorganic filler selected from the group consisting of chopped strand glass fiber, carbon fiber, wollastonite, talc, mica, kaolin, barium sulfate, calcium carbonate, apatite, sodium phosphate, fluorspar, silicon nitride, potassium titanate and molybdenum disulfide, wherein the ratio between the long diameter and the short diameter (long diameter / short diameter) through a cross-section is within a range from 1.3 to 2.5.

Patent Document 6 discloses resin composition pellets having an elliptical cylindrical shape and containing a thermoplastic resin and a desiccant, wherein the ratio of the short diameter relative to the long diameter (short diameter / long diameter) of the elliptical cross-section of the pellets is within a range from 0.5 to 0.9.

Alternatively, improvements to the mechanical characteristics of polyamide resin molded articles or to the molding characteristics of the polyamide resin can also be made by blending various types of filler with the polyamide resin. Examples of these types of fillers include tetrafluoroethylene resin particles used as lubricants and glass fiber and the like used as reinforcing materials.

Patent Document 7 discloses a polyamide resin composition suitable for molding sliding members having excellent low-friction properties and superior wear resistance, wherein the composition is produced by blending polytetrafluoroethylene particles, and if necessary, calcium titanate whiskers or glass fibers or the like, with a polyamide resin typified by nylon 46.

Patent Document 8 discloses a resin composition for a sliding material produced by blending glass fibers, a tetrafluoroethylene resin and molybdenum disulfide with a polyamide resin typified by nylon 66 (polyamide resin 66).

Patent Document 9 discloses a resin composition produced by blending at least 15% by mass but not more than 30% by mass of reinforcing fibers such as small-diameter glass fibers or the like having a fiber diameter of at least 6 $\mu$m but not more than 8 $\mu$m with a thermoplastic resin typified by nylon MXD6 or nylon 66. This resin composition is described as being particularly suited to the production of hollow tubes having excellent inner surface smoothness.

Patent Document 10 discloses a reduction gear for an electric power steering device that is molded using a polyamide resin mixture. Patent Document 4 discloses the blending of a fibrous substance such as glass fiber or carbon fiber with the polyamide resin mixture.

Patent Document 11 discloses the results of investigating various physical properties, particularly the aforementioned wear resistance, friction characteristics and critical PV value, for molded articles of known glass fiber-containing polyamide resin compositions. Specifically, the document reports that particularly superior wear resistance, friction characteristics and critical PV value were achieved when molding was conducted using a polyamide resin composition produced by blending a polyamide 66 having a number average molecular weight within a specific range as the polyamide resin, glass fibers having a specific average fiber diameter and average fiber length that had undergone sizing using a specific sizing agent, and specific additives.

Citation List

Patent Document

Patent Document 1: Japanese Unexamined Patent Application, First Publication No. 2018-197316

Patent Document 2: Japanese Unexamined Patent Application, First Publication No. 2016-117817

Patent Document 3: Japanese Unexamined Patent Application, First Publication No. 2000-198841

Patent Document 4: Japanese Unexamined Patent Application, First Publication No. 2016-69515

Patent Document 5: Japanese Unexamined Patent Application, First Publication No. 2016-14154

Patent Document 6: International Patent Publication No. 2017/111055

Patent Document 7: Japanese Unexamined Patent Application, First Publication No. Sho 62-185747

Patent Document 8: Japanese Unexamined Patent Application, First Publication No. Hei 01-110558

Patent Document 9: Japanese Unexamined Patent Application, First Publication No. Hei 08-41246

Patent Document 10: Japanese Unexamined Patent Application, First Publication No. 2003-83423

Patent Document 11: Japanese Patent (Granted) Publication No. 4321590

SUMMARY OF INVENTION

Technical Problem

However, in Patent Documents 1 and 2, polyamides in the high-molecular weight region having a formic acid relative viscosity of 90 or higher were unable to achieve satisfactory mechanical properties and sliding properties, nor satisfactory reduction in the variation in physical properties, and further improvements are required.

Patent Documents 3 and 4 describe techniques relating to solid-phase polymerization methods for chips (pellets), and Patent Documents 5 and 6 describe technology relating to pellet shape. Accordingly, there has been no prior investigation relating to the shape of pellets used in the solid-phase polymerization of a thermoplastic resin such as a polyamide resin.

On the other hand, in the case of resins that have not been reinforced with a filler, the vibration fatigue characteristics are generally controlled by intertwining of the polymer chains, and therefore high-molecular weight materials tend to exhibit improved vibration fatigue resistance.

In contrast, in the case of resins that have been reinforced with a filler, the interface between the filler and the resin can sometimes act as the source of vibration fatigue rupture, and a lower degree of adhesion at the interface between the filler and the resin causes a lowering of vibration fatigue resistance.

Accordingly, because each of the polyamide resin compositions disclosed in Patent Documents 7 to 11 contain a filler despite having a resin of considerably high molecular weight, they suffer from vibration fatigue resistance which is not entirely satisfactory.

Moreover, one characteristic of polyamide resins is that these polymers tend to be prone to thermo-oxidative degradation, causing yellowing of the resin, and therefore coloring of the resin pellets tends to occur, and the color tone and transparency of the obtained resin molded articles can be poor, resulting in a deterioration in commercial value. As a result, obtaining products with excellent color quality would be very preferable.

The present invention has been developed in light of the above circumstances, and has the objects of providing a fiber-reinforced polyamide resin composition capable of imparting favorable mechanical properties and sliding characteristics with reduced variation in physical properties, as well as providing a molded article, a sliding member, a gear and a worm wheel using this composition.

Further, the present invention also has the object of providing a method for manufacturing a thermoplastic resin composition that can yield improvements in the mechanical characteristics, the long-term characteristics and the productivity.

Furthermore, the present invention also has an object of providing a method for manufacturing a thermoplastic resin composition that can improve the vibration fatigue resistance as well as suppressing coloration.

Solution to Problem

The present invention includes the following aspects.

[1] A fiber-reinforced polyamide resin composition containing a crystalline polyamide (A1) and glass fibers (B1), wherein the formic acid relative viscosity of the fiber-reinforced polyamide resin composition is 90 or higher, the insoluble component when the fiber-reinforced polyamide resin composition is dissolved in formic acid is 105% by mass or higher relative to the ash content of the fiber-reinforced polyamide resin composition, and within the glass fibers (B1) contained in the fiber-reinforced polyamide resin composition, the proportion of glass fibers having a fiber length of 250 $\mu$m or less is not more than 55%.

[2] The fiber-reinforced polyamide resin composition according to [1], wherein the number average fiber diameter of the glass fibers is at least 5 $\mu$m but not more than 9 $\mu$m.

[3] The fiber-reinforced polyamide resin composition according to [1] or [2], wherein the composition contains at least 1 part by mass but not more than 100 parts by mass of the glass fibers (B 1) per 100 parts by mass of the crystalline polyamide (A1).

[4] The fiber-reinforced polyamide resin composition according to any one of [1] to [3], wherein the formic acid relative viscosity is 130 or higher.

[5] A molded article obtained by molding the fiber-reinforced polyamide resin composition according to any one of [1] to [4].

[6] A sliding member formed from the fiber-reinforced polyamide resin composition according to any one of [1] to [4].

[7] The sliding member according to [6], having a coefficient of variation for the tensile strength measured in accordance with ISO 527 of 1.0 or less.

[8] A gear formed from the fiber-reinforced polyamide resin composition according to any one of [1] to [4].

[9] A worm wheel formed from the fiber-reinforced polyamide resin composition according to any one of [1] to [4].

[10] A method for manufacturing a thermoplastic resin composition, the method including:

a melt-kneading step of adding at least 5 parts by mass but not more than 100 parts by mass of glass fibers having an average fiber diameter of at least 3 $\mu$m but not more than 15 $\mu$m per 100 parts by mass of a thermoplastic resin having a viscosity value RV of at least 25 but not more than 70, and then conducting melt-kneading to obtain a melt-kneaded product, and
a heating step of heating the melt-kneaded product at a temperature T represented by general formula (I) shown below to obtain a thermoplastic resin composition, wherein

the melt-kneaded product is composed of elliptical cylinder-shaped pellets, and the ratio a/b between the long diameter a and the short diameter b in a cross-section of the elliptical cylinder-shaped pellets is within a range from 1.3 to 3.0, and

the heating step involves conducting heating while stirring the elliptical cylinder-shaped pellets.

$$Tm\text{-}130°C \leq T \leq Tm\text{-}10°C \qquad (I)$$

(wherein Tm represents the melting point of the thermoplastic resin)

[11] The method for manufacturing a thermoplastic resin composition according to [10], wherein the viscosity value RV of the thermoplastic resin composition is at least 70 but not more than 400.

[12] The method for manufacturing a thermoplastic resin composition according to [10] or [11], wherein in the heating step, heating at the temperature T is conducted for at least 30 minutes but not more than 15 hours.

[13] The method for manufacturing a thermoplastic resin composition according to any one of [10] to [12], wherein the thermoplastic resin is a polyamide or a polyester.

[14] The method for manufacturing a thermoplastic resin composition according to [13], wherein the polyamide is at least one type of polyamide selected from the group consisting of polyamide 6, polyamide 66, polyamide 46, polyamide 610 and polyamide 612.

[15] The method for manufacturing a thermoplastic resin composition according to any one of [10] to [14], wherein in the heating step, heating at the temperature T is conducted in an inert gas atmosphere with an oxygen concentration of not more than 5 ppm.

[16] The method for manufacturing a thermoplastic resin composition according to any one of [10] to [15], wherein in the heating step, heating at the temperature T is conducted in an inert gas atmosphere with a moisture concentration of not more than 10 ppm.

[17] A method for manufacturing a thermoplastic resin composition, the method including:

a melt-kneading step of adding at least 5 parts by mass but not more than 100 parts by mass of glass fibers having an average fiber diameter of at least 3 $\mu$m but not more than 9 $\mu$m per 100 parts by mass of a thermoplastic resin having a viscosity value VN of at least 80 but not more than 200, and then conducting melt-kneading to obtain a melt-kneaded product, and

a heating step of heating the melt-kneaded product at a temperature T represented by general formula (I) shown below to obtain a thermoplastic resin composition, wherein

in the heating step, 0.05 to 1.0% by mass of water is included relative to 100% by mass of the melt-kneaded product obtained in the melt-kneading.

$$Tm\text{-}130°C \leq T \leq Tm\text{-}10°C \qquad (I)$$

(wherein Tm represents the melting point of the thermoplastic resin)

[18] The method for manufacturing a thermoplastic resin composition according to [17], wherein the viscosity value VN of the thermoplastic resin composition is at least 200 but not more than 350.

[19] The method for manufacturing a thermoplastic resin composition according to [17] or [18], wherein the average fiber length of the glass fibers contained in the thermoplastic resin composition following the heating step is at least 100 $\mu$m but not more than 1,000 $\mu$m.

[20] The method for manufacturing a thermoplastic resin composition according to any one of [17] to [19], wherein the average fiber diameter of the glass fibers is at least 4 $\mu$m but not more than 8 $\mu$m.

[21] The method for manufacturing a thermoplastic resin composition according to any one of [17] to [20], wherein in the heating step, heating at the temperature T is conducted for at least 30 minutes but not more than 15 hours.

[22] The method for manufacturing a thermoplastic resin composition according to any one of [17] to [21], wherein in the heating step, heating at the temperature T is conducted in an inert gas atmosphere with an oxygen concentration of not more than 5 ppm.

[23] The method for manufacturing a thermoplastic resin composition according to any one of [17] to [22], wherein the thermoplastic resin is a polyamide or a polyester.

[24] The method for manufacturing a thermoplastic resin composition according to [23], wherein the polyamide is polyamide 6, polyamide 66 or polyamide 610.

[25] The method for manufacturing a thermoplastic resin composition according to any one of [17] to [24], wherein the thermoplastic resin composition contains essentially no boron oxide.

Advantageous Effects of Invention

The present invention is able to provide a fiber-reinforced polyamide resin composition capable of imparting favorable mechanical properties and sliding characteristics with reduced variation in physical properties, as well as providing a molded article, a sliding member, a gear and a worm wheel using this composition.

Further, the present invention is also able to provide a method for manufacturing a thermoplastic resin composition that can yield improvements in the mechanical characteristics, the long-term characteristics and the productivity.

Furthermore, the present invention is also able to provide a method for manufacturing a thermoplastic resin composition that can improve the vibration fatigue resistance as well as suppressing coloration.

DESCRIPTION OF EMBODIMENTS

Embodiments for implementing the present invention are described below in detail. However, the present invention is not limited to the following embodiments, and may be implemented with various modifications within the scope of the invention.

<Fiber-Reinforced Polyamide Resin Composition>

The fiber-reinforced polyamide resin composition of a first embodiment of the present invention contains a crystalline polyamide (A1) and glass fibers (B1). In the following description, the expression "fiber-reinforced polyamide resin composition" is sometimes abbreviated to "polyamide composition".

The formic acid relative viscosity VR of the fiber-reinforced polyamide resin composition is 90 or higher. By ensuring that that the formic acid relative viscosity is at least 90, a fiber-reinforced polyamide resin molded article of superior mechanical properties and sliding characteristics tends to be obtained.

The formic acid relative viscosity VR of the fiber-reinforced polyamide resin composition is preferably 110 or higher, and even more preferably 130 or higher.

The formic acid relative viscosity can be measured in accordance with the method prescribed in ASTM D789, as described in the examples. More specifically, a solution is prepared by dissolving the fiber-reinforced polyamide resin composition in 90% by mass formic acid (containing 10% by mass of water) such that the soluble component within the fiber-reinforced polyamide resin composition represents 8.4% by mass, and this solution is then used to measure the formic acid relative viscosity VR at 25°C.

The fiber-reinforced polyamide resin composition of this embodiment is characterized in that the insoluble component when the fiber-reinforced polyamide resin composition is dissolved in formic acid is 105% by mass or higher relative to the ash content of the fiber-reinforced polyamide resin composition. In this description, the ash content of the fiber-reinforced polyamide resin composition can be considered to represent the blend amount of glass fibers, and can be calculated, for example, as an ash percentage based on the prescription of ISO 3451-4.

By ensuring that the insoluble component when the fiber-reinforced polyamide resin composition is dissolved in formic acid is 105% by mass or higher relative to the ash content (glass fibers blend amount) of the fiber-reinforced polyamide resin composition, a fiber-reinforced polyamide resin molded article having excellent mechanical properties and sliding characteristics can be obtained.

The formic acid insoluble component relative to the ash content (glass fibers blend amount) of the fiber-reinforced polyamide resin composition can be measured using the method described below. A solution is prepared by adding the fiber-reinforced polyamide resin composition to 90% by mass formic acid (containing 10% by mass of water) and stirring the mixture for a full day and night, the solution is then filtered using a membrane filter with a pore size of 0.65 $\mu$m, the formic acid insoluble component retained on the filter paper is isolated and residual solvent is removed from this isolated formic acid insoluble component by drying for a full day and night, the mass of the dried product is then measured, and the amount of the formic acid insoluble component is determined using the formula shown below.

Formic acid insoluble component (% by mass) = dried product mass (g) / mass of fiber-reinforced polyamide resin composition dissolved in formic acid (g) $\times$ 100

Moreover, the ash percentage of the sample is measured in advance, for example, based on the prescription of ISO 3451-4, and the formula shown below is then used to determine the ratio of the mass of the formic acid insoluble component relative to the ash percentage (blend amount of glass fibers).

Formic acid insoluble component relative to ash percentage (% by mass) = formic acid insoluble component (% by mass) / ash percentage (% by mass) $\times$ 100

By ensuring that the fiber-reinforced polyamide resin composition of this embodiment satisfies a specific components, the resulting molded articles can be imparted with favorable mechanical properties, variations in the physical properties can be reduced, and favorable sliding characteristics can also be imparted.

Each of the constituent elements of the fiber-reinforced polyamide resin composition according to this embodiment of the present invention is described below in further detail.

<<Component (A1): Crystalline Polyamide>>

In this description, the term "crystalline polyamide" refers to a polyamide for which the heat of fusion of the crystals when measured at 20°C/min using a differential scanning calorimeter is 4 J/g or higher.

The terminal amino group concentration [NH2] of the crystalline polyamide contained in the fiber-reinforced polyamide resin composition is preferably at least 1 milliequivalent/kg but not more than 100 milliequivalent/kg, more preferably at least 3 milliequivalent/kg but not more than 90 milliequivalent/kg, and even more preferably at least 5 milliequivalent/kg but not more than 80 milliequivalent/kg. By ensuring that the terminal amino group concentration falls within this range, the color tone of the polyamide resin composition is superior, and yellowing due to degradation tends to be better suppressed.

An example of the method used for measuring the terminal amino group concentration involves dissolving a prescribed amount of the polyamide sample in a 90% by volume phenol aqueous solution, and then conducting a titration with 1/50 N hydrochloric acid at 25°C to calculate the terminal amino group concentration.

The terminal carboxyl group concentration [COOH] of the crystalline polyamide contained in the fiber-reinforced polyamide resin composition is preferably at least 10 milliequivalent/kg but not more than 150 milliequivalent/kg, more preferably at least 20 milliequivalent/kg but not more than 140 milliequivalent/kg, and even more preferably at least 30 milliequivalent/kg but not more than 130 milliequivalent/kg. By ensuring that that the terminal carboxyl group concentration falls within this range, the external appearance of molded articles of the fiber-reinforced polyamide resin composition tends to be particularly superior.

An example of the method used for measuring the terminal carboxyl group concentration involves dissolving a prescribed amount of the polyamide sample in benzyl alcohol at 160°C, and then conducting a titration with a 1/10 N potassium hydroxide solution in ethylene glycol with phenolphthalein as an indicator to calculate the terminal carboxyl group concentration.

The ratio between terminal carboxyl groups and terminal amino groups (terminal carboxyl groups / terminal amino groups) within the crystalline polyamide contained in the fiber-reinforced polyamide resin composition is at least 0.1, preferably at least 0.5, and more preferably 1 or greater.

The upper limit for this ratio (terminal carboxyl groups / terminal amino groups) is, for example, not more than 20, not more than 15, or 10 or less.

The above upper limit and lower limit for this ratio (terminal carboxyl groups / terminal amino groups) may be combined as appropriate, with examples of possible combinations including at least 0.1 but not more than 20, at least 0.5 but not more than 15, or at least 1 but not more than 10.

By ensuring that this ratio (terminal carboxyl groups / terminal amino groups) falls within the above range, molded articles having particularly superior fatigue characteristics and gear durability are more readily obtainable.

In this description, the ratio between terminal carboxyl groups and terminal amino groups refers to the value obtained by dividing the terminal carboxyl group concentration [COOH] by the terminal amino group concentration [NH2].

Examples of the crystalline polyamide include, but are not limited to, polyamides (A1-a) obtained by ring-opening polymerization of a lactam, polyamides (A1-b) obtained by self-condensation of a ω-aminocarboxylic acid, polyamides (A1-c) obtained by condensing a diamine and a dicarboxylic acid, and copolymers of these polyamides. A single type of crystalline polyamide may be used alone, or a combination of two or more crystalline polyamides may be used.

Examples of the lactam used in the production of the polyamide (A1-a) include, but are not limited to, pyrrolidone, caprolactam, undecalactam, and dodecalactam.

Examples of the ω-aminocarboxylic acid used in the production of the polyamide (A1-b) include, but are not limited to, ω-amino fatty acids that represent compounds obtained by ring-opening of the above lactams with water.

Further, condensation may also be conducted using a combination of two or more types of the above lactam or ω-aminocarboxylic acid monomers.

Examples of the diamine (monomer) used in the production of the polyamide (A1-c) include, but are not limited to, linear aliphatic diamines, branched aliphatic diamines, alicyclic diamines, and aromatic diamines.

Examples of the linear aliphatic diamines include, but are not limited to, hexamethylenediamine and pentamethylenediamine.

Examples of the branched aliphatic diamines include, but are not limited to, 2-methylpentanediamine and 2-ethylhexamethylenediamine.

Examples of the alicyclic diamines include, but are not limited to, cyclohexanediamine, cyclopentanediamine, and cyclooctanediamine.

Examples of the aromatic diamines include, but are not limited to, p-phenylenediamine and m-phenylenediamine.

Examples of the dicarboxylic acid (monomer) used in the production of the polyamide (A1-c) include, but are not limited to, aliphatic dicarboxylic acids, alicyclic dicarboxylic acids, and aromatic dicarboxylic acids.

Examples of the aliphatic dicarboxylic acids include, but are not limited to, adipic acid, pimelic acid, and sebacic acid.

Examples of the alicyclic dicarboxylic acids include, but are not limited to, cyclohexanedicarboxylic acid and the like.

Examples of the aromatic dicarboxylic acids include, but are not limited to, phthalic acid and isophthalic acid.

Condensation may be conducted using only one diamine and one dicarboxylic as monomers, or using a combination of two or more types of each monomer.

If necessary, the crystalline polyamide may also contain units derived from a trivalent or higher polyvalent carboxylic acid such as trimellitic acid, trimesic acid, and pyromellitic acid. A single type of trivalent or higher polyvalent carboxylic acid may be used alone, or a combination of two or more such polyvalent carboxylic acids may be used.

Specific examples of the crystalline polyamide included in the fiber-reinforced polyamide resin composition of this embodiment include polyamide 4 (poly α-pyrrolidone), polyamide 6 (polycaproamide), polyamide 11 (polyundecanamide), polyamide 12 (polydodecanamide), polyamide 46 (polytetramethylene adipamide), polyamide 56 (polypentamethylene adipamide), polyamide 66 (polyhexamethylene adipamide), polyamide 610 (polyhexamethylene sebacamide), polyamide 612 (polyhexamethylene dodecamide), polyamide 6T (polyhexamethylene terephthalamide), polyamide 9T (polynonamethylene terephthalamide), and copolymerized polyamides containing these polyamides as constituents.

Among these polyamides, from the viewpoint of the sliding characteristics, polyamide 66 (PA66), polyamide 46 (PA46) or polyamide 610 (PA610) is preferred as the crystalline polyamide. In particular, PA66 exhibits excellent heat resistance, moldability and toughness, making it ideal as a material for vehicle componentry, and is therefore most preferred.

There are no particular limitations on the polyamide polymerization method used, and examples include heated melt polycondensation methods, solid-phase polymerization methods, and solution methods. The heated melt polycondensation method is, for example, a method in which hexamethylene adipamide that functions as the raw material for polyamide 66 is blended with an antifoaming agent or the like as required, and a polycondensation is then conducted by subjecting the raw material to heat concentration at a temperature of 40 to 300°C with the generated water vapor pressure is held at a pressure within a range from normal pressure to 20 atmospheres, before the pressure is finally released and lowered to normal pressure or reduced pressure. Further, a solid-phase polymerization method is a method in which polymerization of a solid salt or a condensation product of a diamine and a dicarboxylic acid is conducted at a temperature below the melting point. Moreover, a solution method is a method in which a dicarboxylic acid halide component and a diamine component are subjected to polycondensation in solution. These methods may also be combined as necessary. Further, either a batch polymerization or a continuous polymerization may be used. Furthermore, there are no particular limitations on the polymerization device, and examples of devices that may be used include autoclave reactors, tumbler reactors, and extruder reactors such as kneaders.

In order to obtain a polyamide having the prescribed formic acid relative viscosity VR, typical methods may be used without any particular limitations, including methods in which the heated melt polycondensation method described above is used with appropriate adjustment of the polymerization time, and methods in which a solid-phase polymerization is conducted as a temperature no higher than the melting point of the polycondensation product.

<<Component (B1): Glass Fibers>>

The fiber-reinforced polyamide resin composition of this embodiment of the present invention contains the glass fibers (B 1).

In the glass fibers (B1) contained in the polyamide resin composition, the proportion of glass fibers having a fiber length of 250 μm or less, based on numbers of fibers, is not more than 55%. These glass fibers (B1) having a fiber length of 250 μm or less are sometimes referred to as "short GF".

The number average fiber length of the glass fibers (B1) contained in the polyamide resin composition is preferably at least 300 μm, and more preferably 350 μm or greater.

The proportion of short GF within all of the glass fibers (B1) contained in the polyamide resin composition and the number average fiber length of the glass fibers (B1) can be measured using the method described below. The polyamide of the polyamide composition is removed by dissolution or incineration, the residue is inspected using an optical microscope, an image analysis device is used to measure the length of 400 randomly selected reinforcing fibers, and the proportion of glass fibers having a fiber length of 250 μm or less and the number average fiber length are calculated.

The proportion of short GF within all of the glass fibers contained in the polyamide resin composition is preferably not more than 55%, more preferably not more than 50%, and even more preferably 45% or less.

At least a portion of the surfaces of the glass fibers is preferably coated with a surface treatment agent. By including glass fibers which have been at least partially surface-coated with a surface treatment agent in the fiber-reinforced polyamide resin composition, the fibrillation of the glass fibers within the fiber-reinforced polyamide resin composition is excellent, and the workability is also excellent.

There are no particular limitations on the average fiber diameter of the glass fibers, but the diameter is preferably within a range from 4 to 30 μm, more preferably from 5 to 15 μm, even more preferably from 5 to 9 μm, and particularly preferably from 5 to 8 μm. In this description, the average fiber diameter is a number-based value calculated by observation of the fibers using an electron microscope or the like, and by ensuring that the average fiber diameter falls within the above range, the polyamide resin composition tends to be imparted with superior mechanical strength, rigidity and moldability, and a reduction in variation in the mechanical properties can also be achieved.

Any commercial glass fibers available, for example, as chopped glass, roving glass, or milled glass or the like may be used for the glass fibers.

The surface treatment agent for the glass fibers may also contain a sizing agent, and there are no particular limitations on this sizing agent, with examples including urethane resins, polycarbodiimide compounds, acrylic acid homopolymers, copolymers of acrylic acid and a copolymerizable monomer, salts of a homopolymer (acrylic acid homopolymer) or copolymer (copolymer of acrylic acid and a copolymerizable monomer) and an amine, epoxy resins, and copolymers of a carboxylic acid anhydride-containing unsaturated vinyl monomer and an unsaturated vinyl monomer. One of these sizing agents may be used alone, or a combination of two or more sizing agents may be used.

Although there are no particular limitations on the aforementioned urethane resins, and any resin typically used as a surface treatment agent or sizing agent for glass fibers may be used, urethane resins synthesized from an isocyanate such as m-xylylene diisocyanate (XDI), 4,4'-methylenebis(cyclohexyl isocyanate) (HMDI) or isophorone diisocyanate (IPDI) and a polyester-based or polyether-based diol can be used particularly favorably.

There are no particular limitations on the polycarbodiimide compounds, and examples include compounds obtained by condensing a compound containing one or more carbodiimide groups (-N=C=N-).

The weight average molecular weight of the acrylic acid homopolymer mentioned above is preferably within a range from 1,000 to 90,000, more preferably from 1,000 to 50,000, and even more preferably from 1,000 to 25,000. Weight average molecular weights in this description can be measured by GPC (gel permeation chromatography).

There are no particular limitations on the aforementioned copolymerizable monomer that constitutes the above copolymer of acrylic acid and the copolymerizable monomer, and examples include monomers having a hydroxyl group and/or carboxyl group, and ester-based monomers. There are no particular limitations on these types of copolymerizable monomers, and examples include one or more compounds selected from the group consisting of acrylic acid, maleic acid, methacrylic acid, vinylacetic acid, crotonic acid, isocrotonic acid, fumaric acid, itaconic acid, citraconic acid, mesaconic acid, and ester compounds of these acids (but excluding the case of only acrylic acid). The copolymerizable monomer preferably includes at least one ester-based monomer from among the monomers listed above.

There are no particular limitations on the amines that may be used for forming a salt with the aforementioned homopolymer or copolymer of acrylic acid, and a primary, secondary or tertiary amine may be used, with specific examples including triethylamine, triethanolamine and glycine.

From the viewpoints of improving the stability of mixed solutions with other added reagents (such as a silane coupling agent or the like) and reducing the amine odor, the degree of neutralization is preferably within a range from 20 to 90%, more preferably from 30 to 80%, and even more preferably from 40 to 60%.

There are no particular limitations on the weight average molecular weight of the homopolymer or copolymer of acrylic acid that forms the above salt, but a weight average molecular weight of 3,000 to 50,000 is preferred. By ensuring that the weight average molecular weight is at least 3,000, the sizing of the glass fibers tend to improve. Further, by ensuring that the weight average molecular weight is not more than 50,000, the mechanical characteristics of the resulting molded articles tend to improve.

There are no particular limitations on the aforementioned epoxy resin, but for example, the use of compounds having at least two glycidyl groups is preferred, and among the various options, an epoxy resin obtained by reacting bisphenol and epichlorohydrin is ideal. If consideration is given to the sizing of the glass fibers, then the weight per epoxy equivalent in the epoxy resin is preferably at least 180 g/equivalent, and more preferably within a range from 450 to 1,900 g/equivalent.

In the glass fiber-reinforced polyamide resin composition of this embodiment of the present invention, the surface treatment agent or sizing agent for the glass fibers preferably contains a copolymer of a carboxylic acid anhydride-containing unsaturated vinyl monomer and an unsaturated vinyl monomer. By including this type of copolymer, the obtained molded articles tend to exhibit superior mechanical characteristics.

There are no particular limitations on the carboxylic acid anhydride-containing unsaturated vinyl monomer, and examples include maleic anhydride, itaconic anhydride and citraconic anhydride. Among these, maleic anhydride is preferred.

On the other hand, there are no particular limitations on the unsaturated vinyl monomer, and examples include styrene, α-methylstyrene, ethylene, propylene, butadiene, isoprene, chloroprene, 2,3-dichlorobutadiene, 1,3-pentadiene, cyclooctadiene, methyl methacrylate, methyl acrylate, ethyl acrylate, and ethyl methacrylate. Among these, ethylene, styrene and butadiene are preferred.

Among the various possible combinations of the carboxylic acid anhydride-containing unsaturated vinyl monomer and the unsaturated vinyl monomer, copolymers of maleic anhydride and butadiene, copolymers of maleic anhydride and ethylene, copolymers of maleic anhydride and styrene, and mixtures of these copolymers are preferred.

Further, the weight average molecular weight of the copolymer containing the carboxylic acid anhydride-containing unsaturated vinyl monomer and the unsaturated vinyl monomer is preferably at least 2,000, more preferably within a range from 2,000 to 1,000,000, and even more preferably from 5,000 to 500,000. By ensuring that the weight average molecular weight falls within this range, the fluidity of the glass fiber-reinforced polyamide resin composition tends to improve.

Use of a silane coupling agent as the surface treatment agent for the glass fibers is also ideal. There are no particular limitations on the silane coupling agent, and examples include aminosilanes such as γ-aminopropyltriethoxysilane, γ-aminopropyltrimethoxysilane, and N-β-(aminoethyl)-γ-aminopropylmethyldimethoxysilane; mercaptosilanes such as γ-mercaptopropyltrimethoxysilane and γ-mercaptopropyltriethoxysilane; epoxysilanes; and vinylsilanes. Among these, one or more compounds selected from among those listed above are preferred, and aminosilanes are particularly preferred.

A lubricant is preferably used when preparing the surface treatment agent for the glass fibers. There are no particular limitations on the lubricant, and any typical liquid or solid lubricant material suitable for the intended purpose may be used. There are no particular limitations on these types of lubricants, and examples include plant or animal-based or mineral-based waxes such as carnauba wax and lanolin wax; and surfactants such as fatty acid amides, fatty acid esters, fatty acid ethers, aromatic esters or aromatic ethers.

(Method for Coating Glass Fiber Surfaces with Surface Treatment Agent)

In this embodiment, at least a portion of the surfaces of the glass fibers is preferably coated with a surface treatment agent. There are no particular limitations on the method used for coating the surface treatment agent, and for example, in a conventional production process for glass fibers, a known method such as a roller applicator or the like may be used to apply the surface treatment agent to the glass fibers and produce glass fiber strands, and the produced glass fiber strands may then be dried to enable continuous production of the coated glass fibers.

There are no particular limitations on the state of the glass fibers, and for example, the above glass fiber strands may simply be used with no further modification as roving, or the strands may be subjected to a cutting step and used as chopped glass strands. Drying of the strands may be conducted after the cutting step, or the strands may be dried first and then cut.

The amount of the surface treatment agent adhered to the glass fibers, expressed as a solid fraction per 100 parts by mass of the glass fibers, is preferably within a range from 0.1 to 1.0 parts by mass, more preferably from 0.2 to 1.0 parts by mass, even more preferably from 0.2 to 0.8 parts by mass, and most preferably from 0.2 to 0.6 parts by mass. By ensuring that the amount adhered of the surface treatment agent to the glass fibers, expressed as a solid fraction, is at least 0.1 parts by mass per 100 parts by mass of the glass fibers, the coating of the surface treatment agent on the glass fibers tends to be better retained. In contrast, by ensuring that the amount used of the surface treatment agent, expressed as a solid fraction, is not more than 1.0 parts by mass per 100 parts by mass of the glass fibers, the thermal stability of the fiber-reinforced polyamide resin composition tends to improve.

The polyamide resin composition of this embodiment preferably contains at least 1 part by mass but not more than 100 parts by mass, and more preferably at least 15 parts by mass but not more than 50 parts by mass of the glass fibers (B1) per 100 parts by mass of the crystalline polyamide (A1).

<<Component (C1): Copper Compound>>

A copper compound is preferably added to the polyamide resin composition. The copper compound is sometimes referred to as "component (C1)". There are no particular limitations on the component (C1), and examples include copper halides, copper acetate, copper propionate, copper benzoate, copper adipate, copper terephthalate, copper isophthalate, copper salicylate, copper nicotinate and copper stearate, as well as copper complex salts coordinated with a chelating agent such as ethylenediamine or ethylenediaminetetraacetic acid. One of these copper compounds may be used alone, or a mixture of two or more copper compounds may be used. Among these compounds, copper halides are preferred, copper iodide, cuprous bromide, cupric bromide, cuprous chloride and copper acetate are preferred from the viewpoints of suppressing molecular weight reduction during melt kneading and/or resistance to heat aging, and copper iodide is particularly preferred.

<<Component (D1): Alkali Metal Halide and/or Alkaline Earth Metal Halide>>

The polyamide resin composition preferably has one or both of an alkali metal halide and an alkaline earth metal halide added to the composition. This alkali metal halide and/or alkaline earth metal halide is sometimes referred to as "component (D1)".
Examples of the component (D1) include, but are not limited to, potassium iodide, potassium bromide, potassium chloride, sodium iodide, sodium chloride, and mixtures of these compounds. One of these compounds may be used alone, or a combination of two or more compounds may be used.
For the component (D1), an alkali metal halide may be used alone, an alkaline earth metal halide may be used alone, or a combination of both an alkali metal halide and an alkaline earth metal halide may be used.
Among the various possibilities, from the viewpoints of improving the resistance to heat aging and suppressing metal corrosion, potassium iodide and/or potassium bromide is preferred, and potassium iodide is particularly preferable.
By using a combination of the component (C1) and the component (D1), not only can a superior thermal stability effect be obtained, but better suppression of variations in the mechanical properties and improved wear resistance can also be achieved, both of which are preferable. In those cases where a combination is used, the component (C1) and the component (D1) are preferably included in the polyamide resin composition such that the molar ratio between the halogen content and the copper content (halogen/copper) is within a range from 3/1 to 50/1.
This molar ratio between the halogen content and the copper content (halogen/copper) is more preferably within a range from 4/1 to 40/1, and even more preferably from 5/1 to 30/1. Here, the term "halogen" means halogen elements such as Br and I, and moreover, in those cases where a copper halide is used as the component (C1), means the combined total of halogen derived from the copper halide and the halogen derived from the component (D1).
Those cases where the molar ratio between the halogen content and the copper content falls within the above range are preferred from the viewpoints of suppressing copper precipitation and metal corrosion, suppressing variation in the mechanical strength, and improving the wear resistance.

<<Heat Stabilizer>>

A heat stabilizer is preferably added to the polyamide resin composition. There are no particular limitations on the heat stabilizer, and examples include phenol-based stabilizers such as hindered phenol compounds, phosphite-based stabilizers, hindered amine-based stabilizers, triazine-based stabilizers, and sulfur-based stabilizers. One of these heat stabilizers may be used alone, or a combination of two or more such heat stabilizers may be used. When a heat stabilizer is included, degradation caused by heat tends to be able to be better suppressed.
There are no particular limitations on the amount of the heat stabilizer in this embodiment, but from the viewpoints of effectively suppressing degradation caused by heat, preventing coloration, and better maintaining mechanical properties, the amount of the heat stabilizer is preferably within a range from 0.005 to 5 parts by mass, more preferably from 0.015 to 2 parts by mass, and even more preferably from 0.03 to 0.1 parts by mass, per 100 parts by mass of the polyamide resin.
A phenol-based stabilizer is a molecule containing a phenol group, and although there are no particular limitations, examples include the product Irganox (a registered trademark) 1098 (manufactured by BASF Corporation) and the like.
A phosphite-based stabilizer is a molecule containing a phosphorus element, and although there are no particular limitations, examples include the product PEP (a registered trademark) 36 (manufactured by ADEKA Corporation) and the like.

<<Other Additives>>

The polyamide resin composition may, if necessary, contain other additives, provided they do not impair the objects of this embodiment of the present invention. There are no particular limitations on these other additives, and examples include inorganic fillers other than glass fibers, antioxidants, ultraviolet absorbers, photodegradation inhibitors, plasticizers, lubricants, mold release agents, nucleating agents, flame retardants and colorants, and other thermoplastic resins may also be mixed into the composition. Because the above additives have very different properties, the ideal amount of each component to ensure almost no impairment of the effects of this embodiment varies, and may be set as appropriate for each component.

<Method for manufacturing Fiber-Reinforced Polyamide Resin Composition>

There are no particular limitations on the method for manufacturing the fiber-reinforced polyamide resin composition according to an embodiment of the present invention, and the composition can be produced by mixing and kneading, in any desired order, the crystalline polyamide (A1), the glass fibers (B1), and any other components that may be added as required.

The fiber-reinforced polyamide resin composition is preferably melt-kneaded using any of the various extruders commonly used such as a single screw or twin screw extruder, and from the viewpoints of productivity and versatility and the like, a method that uses a twin screw extruder is particularly preferable. Specifically, in those cases where glass chopped strands are used as the glass fibers (B1), a method using a twin screw extruder having an upstream supply port and a downstream supply port, wherein the glass chopped strands are supplied from the upstream supply port for melt-kneading, is preferably employed. In those cases where a high-molecular weight polyamide is used, conducting melt-kneading using a twin screw extrude can sometimes cause a reduction in the molecular weight, and therefore it is preferable to employ a method in which a low-molecular weight polyamide and the glass fibers (B1) are first subjected to melt-kneading, and a solid-phase polymerization at a temperature no higher than the melting point is then conducted to obtain the high-molecular weight fiber-reinforced polyamide resin composition. Further, in those cases where glass roving is used, appropriate combinations of conventional methods may be used.

<Molded Article using Fiber-Reinforced Polyamide Resin Composition>

The molded article of a second embodiment of the present invention contains the fiber-reinforced polyamide resin composition according to the first embodiment described above. Although there are no particular limitations, molded articles for various components can be obtained, for example, by injection molding of the fiber-reinforced polyamide resin composition according to the embodiment described above.

There are no particular limitations on the molded article of this embodiment, and for example, the molded article may be used for a wide variety of components for use in vehicles, machinery, electrical and electronic applications, industrial materials, and everyday household applications. In this manner, the molded article of this embodiment is able to impart favorable mechanical properties and wear characteristics and reduce variations in physical properties for all manner of components.

Examples of the physical properties for which it is preferable to reduce variation include tensile strength and the like. Examples of variation quantities that indicate the level of variation include relative variation quantities such as coefficients of variation and absolute variation quantities such as standard deviations.

In this description, a coefficient of variation CV means a percentage of the ratio of the standard deviation $\sigma$ relative to the arithmetic mean $\mu$, and is determined using the formula: $CV = (\sigma/\mu) \times 100$.

The molded article preferably has a coefficient of variation for the tensile strength measured in accordance with ISO 527 of 1.0 or less.

The fiber-reinforced polyamide resin composition according to the first embodiment of the present invention has excellent mechanical characteristics and wear characteristics and exhibit low variation in physical properties, and can therefore be used favorably for vehicle componentry, and can be used particularly favorably for sliding members such as vehicle gears, worms and worm wheels and the like.

<Method for manufacturing Thermoplastic Resin Composition>

A method for manufacturing a thermoplastic resin composition according to a third embodiment of the present invention includes a melt-kneading step and a heating step. Descriptions of components and the like that are the same as those described for the first and second embodiment may sometimes be omitted.

The melt-kneading step is a step of adding at least 5 parts by mass but not more than 100 parts by mass of glass fibers having a number average fiber diameter of at least 3 $\mu$m but not more than 15 $\mu$m per 100 parts by mass of a thermoplastic resin having a viscosity value RV of at least 25 but not more than 70, and then conducting melt-kneading to obtain a melt-kneaded product.

The heating step (hereinafter sometimes referred to as the "solid-phase polymerization") is a step of heating the elliptical cylinder-shaped pellets of the melt-kneaded product at a temperature T represented by general formula (I) shown below to obtain a thermoplastic resin composition.

$$Tm\text{-}130°C \leq T \leq Tm\text{-}10°C \qquad (I)$$

(wherein Tm represents the melting point of the thermoplastic resin)

In the manufacturing method of this embodiment, the melt-kneaded product is composed of elliptical cylinder-shaped pellets having an elliptical cylindrical shape, wherein the ratio a/b between the long diameter a and the short diameter b in a cross-section of the elliptical cylinder-shaped pellets is within a range from 1.3 to 3.0, and in the heating step, heating is conducted while stirring the elliptical cylinder-shaped pellets.

In conventional technology, in order to obtain a thermoplastic resin composition of increased molecular weight, the thermoplastic resin is generally first polymerized to increase the molecular weight, and the glass fibers are then added and melt-kneading is conducted.

In contrast, in the manufacturing method of this embodiment, because the viscosity value RV is prescribed, and a thermoplastic resin composition of low to medium molecular weight is melt-kneaded together with the glass fibers, with the melt-kneaded product extruded as a strand and then passed through a cooling bath or the like to obtain pellets of a prescribed shape, when these pellets of prescribed shape are subsequently subjected to solid-phase polymerization, by selectively increasing the high-molecular weight component, an increase in the molecular weight of the resin composition can be achieved with good efficiency. Further, the time required for the solid-phase polymerization can also be shortened.

Each of the steps of the manufacturing method of this embodiment is described below in further detail.

(Melt-Kneading Step)

The melt-kneading step in the manufacturing method of this embodiment involves adding glass fibers having a number average fiber diameter of at least 3 μm but not more than 15 μm in a prescribed blend ratio to a thermoplastic resin having a viscosity value RV of at least 25 but not more than 70, and then conducting melt-kneading to obtain a melt-kneaded product.

Specifically, at least 5 parts by mass but not more than 100 parts by mass, preferably at least 7 parts by mass but not more than 95 parts by mass, and more preferably at least 10 parts by mass but not more than 90 parts by mass of the glass fibers may be added per 100 parts by mass of the thermoplastic resin. Alternatively, at least 11 parts by mass but not more than 100 parts by mass, at least 11 parts by mass but not more than 34 parts by mass, or at least 34 parts by mass but not more than 100 parts by mass of the glass fibers may be added per 100 parts by mass of the thermoplastic resin.

By ensuring that that the blend amount of the glass fibers is at least as large as the above lower limit, a thermoplastic resin composition of enhanced rigidity and strength can be obtained. On the other hand, by ensuring that that the blend amount of the glass fibers is not more than the above upper limit, the obtained thermoplastic resin composition exhibits more favorable moldability upon molding in a variety of applications.

A conventional device may be used as the device for conducting the melt-kneading. For example, a melt-kneading apparatus such as a single screw or double screw extruder, a Banbury mixer or a mixing roller may be used. Among these, a multi screw extruder fitted with a venting mechanism (vent) and a side feeder unit is preferred, and a twin screw extruder is particularly preferable.

When the thermoplastic resin and the glass fibers are melt-kneaded in the extruder, the molecular weight of the thermoplastic resin can be adjusted by appropriate setting of the kneading conditions such as the resin temperature, the degree of pressure reduction and the average residence time in the extruder.

The resin temperature during the melt-kneading, is preferably at least as high as the melting point of the raw material thermoplastic resin but not more than 370°C, more preferably at least 5°C higher than the melting point of the raw material thermoplastic resin but not more than 350°C, even more preferably at least 10°C higher than the melting point of the raw material thermoplastic resin but not more than 340°C, still more preferably at least 15°C higher than the melting point of the raw material thermoplastic resin but not more than 335°C, and most preferably at least 20°C higher than the melting point of the raw material thermoplastic resin but not more than 330°C. By ensuring that the temperature of the raw material (resin) during the melt-kneading is at least as high as the melting point of the raw material thermoplastic resin, melting of the raw material thermoplastic resin occurs satisfactorily, and the load on the extruder motor tends to be reduced. Further, by ensuring that the resin temperature during melt-kneading is not more than 370°C, degradation of the raw material thermoplastic resin itself tends to be able to be better suppressed.

For example, in those cases where polyamide 66 with a melting point of 264°C is used as the thermoplastic resin, the resin temperature during melt-kneading is preferably at least 264°C but not more than 360°C, more preferably at least 270°C but not more than 350°C, even more preferably at least 275°C but not more than 340°C, still more preferably at least 280°C but not more than 335°C, and most preferably at least 285°C but not more than 330°C. In those cases where a polyamide resin other than polyamide 66 is used as the raw material polyamide resin, these temperature ranges may be adjusted appropriately in accordance with the melting point of the polyamide resin.

The resin temperature during the melt-kneading can be measured, for example, by bringing a temperature meter such as a thermocouple into direct contact with the melt-kneaded product exiting the discharge port (spinneret) of the extruder. Adjustments to the resin temperature during the melt-kneading can be made by adjusting the temperature of the heater fitted to the cylinder of the extruder, or by appropriately adjusting the amount of resin shear heat generation by altering the rotational speed or discharge rate for the extruder.

The average residence time during the melt-kneading is preferably at least 10 seconds but not more than 120 seconds, more preferably at least 20 seconds but not more than 100 seconds, even more preferably at least 25 seconds but not more than 90 seconds, still more preferably at least 30 seconds but not more than 80 seconds, and most preferably at least 35 seconds but not more than 70 seconds. By ensuring that the average residence time during the melt-kneading is at least 10 seconds, the melt-kneaded product tends to be obtained more efficiently. Further, by ensuring that the average residence time during the melt-kneading is not more than 120 seconds, the discharge speed (production speed) for the extrusion can be improved to some extent. As a result, the productivity for the polyamide resin composition tends to be more favorable.

The "average residence time" means the actual residence time in those cases where the residence time inside the melt-kneading apparatus is constant, or means the average of the shortest residence time and the longest residence time in those cases where the residence time is not uniform. The average residence time can be measured by adding a component (hereinafter abbreviated as the "component X") that can be distinguished from the raw material polyamide resin used in the melt-kneading step, such as a colorant masterbatch, or a resin having a different color from the raw material polyamide resin used in the melt-kneading step, to the melt-kneading apparatus during the melt-kneading process, measuring the discharge start time where the color of the component X is most intense and the discharge finish time for the component X, and then averaging the discharge start time and the discharge finish time. The average residence time can be adjusted appropriately by altering the discharge rate (discharge speed) and/or the rotational rate of the extruder.

The melt-kneaded product (resin composition) obtained in the melt-kneading is subjected to a cooling step to obtain elliptical cylinder-shaped pellets having an elliptical cylindrical shape. The shape of these elliptical cylinder-shaped pellets is obtained by adjusting the length of time the strands are cooled in a cold water bath or the like. For example, cooling may be conducted so that the water-immersed length of the strands is preferably within a range from 5 to 60 cm, more preferably from about 10 to 45 cm, and even more preferably from about 10 to 30 cm, and these strands may then be cut with a strand cutter.

In the manufacturing method of this embodiment, the cross-section of the elliptical cylinder-shaped pellets has a specific flat cross-section. Specifically, in the cross-section of the elliptical cylinder-shaped pellets, the ratio (a/b) between the long diameter a and the short diameter b of the cross-section must be within a range from 1.3 to 3.0, and is preferably within a range from 1.35 to 2.95, and more preferably from 1.4 to 2.9. By ensuring that the ratio (a/b) between the long diameter a and the short diameter b of the cross-section is at least 1.3, the molecular weight can be increased efficiently. Further, by ensuring that the ratio (a/b) between the long diameter a and the short diameter b of the cross-section is not more than 3.0, breakage or damage of the pellets caused by the solid-phase polymerization can be suppressed. The cross-section of the elliptical cylinder-shaped pellets describes the cross-section orthogonal to the direction of extension (lengthwise direction) of the cylinder of the elliptical cylindrical shape of the pellets, and the long diameter and short diameter of the elliptical shape correspond with the above long diameter a and short diameter b respectively of the cross-section. Specifically, the long diameter and short diameter of the cross-section of 100 pellets are measured using electronic calipers, the number average long diameter a and the number average short diameter b is calculated, and the ratio a/b between the long diameter a and the short diameter b of the pellet cross-section can then be calculated.

The length of the elliptical cylinder-shaped pellets is preferably within a range from 1.5 to 5.0 mm, more preferably from 2.0 to 4.5 mm, and particularly preferably from 2.5 to 4.0 mm. By ensuring that the length of the elliptical cylinder-shaped pellets falls within this range, the handleability of the pellets improves.

The materials used in the melt-kneading step described above are described below in further detail.

- Thermoplastic Resin

The thermoplastic resin has a viscosity value RV that is at least 25 but not more than 70, preferably at least 27 but not more than 65, more preferably at least 30 but not more than 60, and even more preferably at least 45 but not more than 60. By ensuring that the viscosity value RV falls within this range, the degree of polymerization of the thermoplastic resin falls within an appropriate range, and therefore the resin is kneaded with the glass fibers in a state where the polyamide has a large number of terminals, enabling an improvement in the degree of adhesion at the interface between the glass fibers and the thermoplastic resin. The viscosity value RV represents a value measured in 90% formic acid at 25°C as prescribed in ASTM D789.

Further, although a variety of thermoplastic resins can be used as the thermoplastic resin, a polyamide or polyester is preferred, and a polyamide is particularly preferred. The reasons for this preference are that a higher molecular weight composition can be obtained in the same solid phase polymerization time, and that the time required for the solid phase step can be shortened.

Examples of the polyamide include polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecanamide (nylon 11), polydodecanamide (nylon 12), polycaproamide/polyhexamethylene adipamide copolymer (nylon 6/66), polycaproamide/polyhexamethylene terephthalamide copolymer (nylon 6/6T), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene terephthalamide/polyhexamethylene isophthalamide copolymer (nylon 6T/6I), polyhexamethylene terephthalamide/polyundecanamide copolymer (nylon 6T/11), polyhexamethylene terephthalamide/polydodecanamide copolymer (nylon 6T/12), polyhexamethylene adipamide/polyhexamethylene terephthalamide/polyhexamethylene isophthalamide copolymer (nylon 66/6T/6I), polyxylylene adipamide (nylon XD6), polyxylylene sebacamide (nylon XD10), polyhexamethylene terephthalamide/polypentamethylene terephthalamide copolymer (nylon 6T/5T), polyhexamethylene terephthalamide/poly-2-methyl pentamethylene terephthalamide copolymer (nylon 6T/5MT), polypentamethylene terephthalamide/ polydecamethylene terephthalamide copolymer (nylon 5T/10T), polynonamethylene terephthalamide (nylon 9T), polydecamethylene terephthalamide (nylon 10T), and polydodecamethylene terephthalamide (nylon 12T). In these polyamide names, the symbol "/" indicates a copolymer. One of these polyamides may be used alone, or a combination of two or more polyamides may be used.

Among these possibilities, the use of at least one polyamide selected from the group consisting of polyamide 6, polyamide 66, polyamide 46, polyamide 610 and polyamide 612 is preferred, and the use of polyamide 66 is particularly preferable. Polyamide 66 is already a well-known polyamide resin, and is typically produced by the polycondensation of hexamethylenediamine and adipic acid. Alternatively, polyamide 66 may be a copolymer containing one or more monomer units selected from the group consisting of lactams, aminocarboxylic acids, and other diamines and dicarboxylic acids in an amount of less than 30% by mass relative to the total mass of all of the monomer units.

Further, a commercially available product may be used as the polyamide, or the polyamide may be produced using a conventional method. There are no particular limitations on the specific method used for producing the polyamide, and examples include the methods mentioned above for the first embodiment, including methods that involve ring-opening polymerization of a lactam, methods that involve self-condensation of a ω-aminocarboxylic acid, and methods that involve condensation of a diamine and a dicarboxylic acid.

Moreover, in the polyamide, the value [NH2]/[COOH] obtained by dividing the quantity of amino terminal groups by the quantity of carboxyl terminal groups is preferably at least 0.5 but not more than 0.9, and more preferably at least 0.5 but less than 0.6. By ensuring that the value [NH2]/[COOH] falls within this range, the interactions between the glass fiber surfaces and the polyamide terminals during melt-kneading become satisfactorily large, thereby improving the physical properties of the resulting composition. The quantity of amino terminal groups and the quantity of carboxyl terminal groups can be measured, for example, using 1H-NMR.

The aforementioned polyester is a polycondensation product of a polyvalent carboxylic acid (dicarboxylic acid) and a polyalcohol (diol). Examples of the polyvalent carboxylic acid include terephthalic acid and 2,6-naphthalenedicarboxylic acid. Examples of the polyalcohol include ethylene glycol, 1,3-propanediol, 1,4-butanediol, and 1,4-cyclohexanedimethanol. One of each of these components may be used alone, or a combination of two or more compounds may be used. Specific examples of the polyester include polyethylene terephthalate, polytrimethylene terephthalate, polybutylene terephthalate, polyethylene naphthalate, and polybutylene naphthalate.

- Glass Fibers

The glass fibers used are preferably prepared by sizing fibers containing an acrylic resin, an epoxy resin or a urethane resin or the like as the main component with a conventional sizing agent (binder), and the use of glass fibers prepared by sizing fibers containing an acrylic resin or an epoxy resin as the main component with a sizing agent is particularly preferable.

Further, the use of glass fibers that have undergone a preliminary treatment with a coupling agent such as an isocyanate compound, organic silane compound, organic titanate compound, organic borane compound or epoxy compound is preferred, as such pretreated glass fibers can be expected to provide further improvements in the mechanical characteristics of the resulting molded articles.

The average fiber length of the glass fibers in the melt-kneaded product is preferably at least 100 μm but not more than 1,000 μm. By ensuring that the average fiber length of the glass fibers is at least 100 μm, a satisfactory reinforcing effect is able to manifest more reliably, and the impact strength and tensile strength of the obtained thermoplastic resin composition can be further improved. On the other hand, by ensuring that the average fiber length of the glass fibers is not more than 1,000 μm, a potential problem wherein glass fibers may protrude out of the pellets during pelletization of the obtained melt-kneaded product, causing a reduction in the bulk density of the pellets, can be more effectively suppressed.

The average fiber length of the glass fibers can be measured, for example, using the following method. First, 100 or more glass fibers are randomly selected, and the total mass of those glass fibers is measured. Subsequently, the fiber length of each of the glass fibers is measured by observation using an optical microscope or a scanning electron microscope or the like, and the combined total of those fiber lengths divided by the total mass of the glass fibers is calculated as the weight average fiber length.

The average fiber diameter of the glass fibers is typically at least 3 μm but not more than 15 μm, and is preferably at least 4 μm but not more than 13 μm, and more preferably at least 5 μm but not more than 10 μm. In other words, the raw material glass fibers preferably have an extremely narrow shape. By ensuring that the average fiber diameter of the glass fibers is at least 3 μm, the strength of the glass fibers is satisfactorily high, and a better reinforcing effect can be achieved. By ensuring that the average fiber diameter of the glass fibers is not more than 15 μm, the surface area of the glass fibers can be kept satisfactorily high, and the degree of adhesion at the interface between the glass fibers and the resin can be further strengthened.

The average fiber diameter of the glass fibers can be measured, for example, using the following method. First, 100 glass fibers are randomly selected. Subsequently, the fiber diameter of each of the glass fibers is measured by observation using an optical microscope or a scanning electron microscope or the like, and the combined total of those fiber diameters divided by 100 is calculated as the number average fiber diameter.

- Copper Compound

In the melt-kneading step, a copper compound may be blended with the thermoplastic resin and glass fibers described above.

Examples of the copper compound include copper salts of inorganic acids such as cuprous chloride, cupric chloride, cuprous bromide, cupric bromide, cuprous iodide (copper iodide), copper sulfate, copper phosphate, copper borate, and copper nitrate; and copper salts of organic acids such as copper acetate, copper propionate, copper benzoate, copper adipate, copper terephthalate, copper isophthalate, and copper stearate. Alternatively, copper complex salts coordinated with a chelating agent may also be used. Among the various possibilities, the use of cuprous iodide is preferred. One of these copper compounds may be used alone, or a combination of two or more copper compounds may be used.

Although there are no particular limitations on the blend amount of the copper compound, the blend amount per 100 parts by mass of the thermoplastic resin is preferably at least 0.0001 parts by mass but not more than 1 part by mass, more preferably at least 0.005 parts by mass but not more than 0.3 parts by mass, and more preferably at least 0.02 parts by mass but not more than 0.1 parts by mass.

- Metal Halide

In the melt-kneading step, a metal halide may be blended with the thermoplastic resin and glass fibers described above.

A potassium halide is preferred as the metal halide. Specific examples of the potassium halide include potassium iodide, potassium bromide and potassium chloride. Among these, potassium iodide is preferred. One of these potassium halides may be used alone, or a combination of two or more potassium halides may be used.

Although there are no particular limitations on the blend amount of the metal halide, the blend amount per 100 parts by mass of the thermoplastic resin is preferably at least 0.0001 parts by mass but not more than 1 part by mass, more preferably at least 0.005 parts by mass but not more than 0.8 parts by mass, and even more preferably at least 0.02 parts by mass but not more than 0.7 parts by mass.

- Other Resin Components

In the manufacturing method of this embodiment, in addition to the thermoplastic resin having a viscosity value within the range described above, another thermoplastic resin having a viscosity value outside of the above range may also be used as a raw material resin, provided the characteristics of the resulting thermoplastic resin composition are not impaired.

Examples of this other thermoplastic resin having a viscosity value outside of the above range include general-purpose resins such as polyethylene, polypropylene, ethylene-propylene copolymers, polystyrene, ABS resins, AS resins and acrylic resins; aliphatic polyamides such as polyamide 6 and polyamide 11; as well as polycarbonate, polyphenylene oxide, polyethylene terephthalate, polybutylene terephthalate, and polyphenylene sulfide. These other thermoplastic resins are preferably used in a form that has undergone modification with a modifying agent such as maleic anhydride or a glycidyl group-containing monomer. Among the various resins, those having no functional groups such as polyethylene, polypropylene or ethylene-propylene copolymers are preferably modified before use.

(Heating Step)

The heating step in the manufacturing method of this embodiment of the present invention is a step of heating the melt-kneaded product at a temperature T represented by general formula (I) shown below to increase the molecular weight of the thermoplastic resin in the melt-kneading product by solid-phase polymerization, thus obtaining a thermoplastic resin composition.

$$Tm\text{-}130°C \leq T \leq Tm\text{-}10°C \qquad (I)$$

(wherein Tm represents the melting point of the thermoplastic resin)

The melt-kneading product obtained in the melt-kneading step described above may be introduced from the extruder directly into the solid-phase polymerization reactor to conduct the solid-phase polymerization, or may be first wrapped and stored in a paper bag or the like before being added to the solid-phase polymerization reactor to conduct the solid-phase polymerization.

By ensuring that the heating temperature T in the heating step is at least as high as "the melting point of the thermoplastic resin - 130°C", the reaction can be accelerated, enabling the polymerization to be conducted more efficiently and the target degree of polymerization to be achieved. Further, by ensuring that the heating temperature T is no higher than "the melting point of the thermoplastic resin - 10°C", not only can thermal degradation of the thermoplastic resin be better suppressed and coloration deterioration of the polymer surface suppressed, but fusion of composition pellets can also be better suppressed.

The melting point Tm of the polyamide resin composition can be measured in accordance with JIS-K7121. A Diamond DSC apparatus manufactured by PerkinElmer, Inc. or the like can be used as the measurement apparatus. Specifically, the melting point Tm can be measured using the method described below in the examples.

In the heating step, the heating time for the melt-kneaded product at a temperature within the above temperature range is preferably at least 30 minutes but not more than 15 hours. By ensuring that the heating time is at least as long as the above lower limit, the thermoplastic resin composition is able to more efficiently reach the desired viscosity (degree of polymerization of the thermoplastic resin). Further, by ensuring that the heating time is no longer than the above upper limit, fusion of lower degree condensates during the solid-phase polymerization and coloration (yellowing) of the composition can be more effectively suppressed.

The solid-phase polymerization reaction may be conducted using either a continuous method or a batch method. The solid-phase polymerization reactor may be either a vertical or a horizontal reactor. In order to improve the reaction uniformity, the solid-phase polymerization reaction is preferably conducted under stirring. The polymerization reactor may have a rotating main body, or may be stirred using a stirring blade or the like. Of the various possibilities, the solid-phase polymerization reaction in the heating step is preferably conducted continuously.

Furthermore, the solid-phase polymerization reaction in the heating step may be conducted either under vacuum or under a gas stream, but is preferably conducted under a stream of an inert gas such as nitrogen gas.

In those cases where the solid-phase polymerization is conducted under an inert gas stream, the reaction is preferably conducted in an inert gas atmosphere with an oxygen concentration of not more than 5 ppm. By ensuring that the oxygen concentration is not more than 5 ppm, oxidative degradation of the obtained thermoplastic resin composition can be more effectively suppressed. As a result, reactions that cause molecular chain cleavage, and any reduction in the speed with which the molecular weight increases (the polymerization reaction rate) can be better suppressed, and a thermoplastic resin composition of the prescribed molecular weight can be obtained. Further, any deterioration in the mechanical characteristics or yellowing of the obtained thermoplastic resin can be more effectively suppressed.

Further, in those cases where the solid-phase polymerization is conducted under an inert gas stream, the reaction is preferably conducted in an inert gas atmosphere with a moisture concentration of not more than 10 ppm. By ensuring that the moisture concentration is not more than 10 ppm, progression of hydrolysis reactions of the thermoplastic resin can be more effectively suppressed. As a result, any reduction in the speed with which the molecular weight increases (the polymerization reaction rate) can be better suppressed, and a thermoplastic resin composition of the prescribed molecular weight can be obtained.

Moreover, in those cases where the solid-phase polymerization is conducted under an inert gas stream, the reaction is preferably conducted while the melt-kneaded pellets are used to form a particle layer, and the inert gas is supplied in an amount, per 10 kg of the melt-kneaded pellets, of at least 50 L/hour but not more than 1,000 L/hour, preferably at least 100 L/hour but not more than 900 L/hour, and more preferably at least 200 L/hour but not more than 800 L/hour, from a location at least 0 times but not more than 0.8 times, and preferably at least 0 times but not more than 0.5 times the height h of the particle layer.

The height h of the particle layer of the melt-kneaded pellets is defined in the following manner. Namely, the solid-phase polymerization reactor is opened, an operational equivalent amount of the particles or pellets of the melt-kneaded is placed in the reactor at normal temperature and atmospheric pressure, and with a prescribed amount of the inert gas passing through the reactor, the height of the particle layer is measured relative to the bottom of the reactor having the gas supply port (h=0), and this height is deemed h. In those cases where the surface at the top of the particle layer fluctuates, the highest height and the lowest height are measured, and the average of these two values may be deemed the height h.

<Thermoplastic Resin Composition>

The thermoplastic resin composition obtained using the manufacturing method of this embodiment exhibits excellent mechanical characteristics, long-term characteristics and productivity.

Further, the thermoplastic resin composition of this embodiment has a viscosity value RV that is preferably at least 70 but not more than 400, more preferably at least 80 but not more than 380, even more preferably at least 90 but not more than 350, and still more preferably at least 150 but not more than 200. By ensuring that the RV value is at least as high as the above lower limit, the mechanical properties are superior, whereas by ensuring that the RV value is not more than the above upper limit, the moldability is more favorable when molded in any of various applications.

Moreover, the amount of the glass fibers in the thermoplastic resin composition of this embodiment is preferably at least 5 parts by mass but not more than 100 parts by mass, and more preferably at least 10 parts by mass but not more than 100 parts by mass, per 100 parts by mass of the thermoplastic resin. By ensuring that the amount of the glass fibers is at least 5 parts by mass per 100 parts by mass of the thermoplastic resin, the rigidity and strength of the thermoplastic resin composition can be enhanced, whereas by ensuring that the amount of the glass fibers is not more than 100 parts by mass per 100 parts by mass of the thermoplastic resin, the moldability is more favorable when the thermoplastic resin composition is subjected to molding in any of various applications.

Furthermore, the weight average fiber length of the glass fibers contained in the thermoplastic resin composition of this embodiment is preferably at least 100 $\mu$m but not more than 1,000 $\mu$m. By ensuring that the average fiber length of the glass fibers is at least 100 $\mu$m, a more satisfactory reinforcing effect is able to manifest, and the impact strength and tensile strength can be further improved. On the other hand, by ensuring that the average fiber length of the glass fibers is not more than 1,000 $\mu$m, a potential problem wherein glass fibers may protrude out of the pellets when the thermoplastic resin composition is pelletized, causing a reduction in the bulk density of the pellets, can be more effectively suppressed.

The average fiber length of the glass fibers contained in the thermoplastic resin composition can be measured, for example, using the following method.

First, the thermoplastic resin composition is dissolved in a solvent such as formic acid that is capable of dissolving the thermoplastic resin. Subsequently, for example, 100 or more glass fibers are randomly selected from the resulting insoluble fraction, and the total mass of those glass fibers is measured. Subsequently, the fiber length of each of the glass fibers is measured by observation using an optical microscope or a scanning electron microscope or the like, and the value of the combined total of those fiber lengths divided by the total mass of the glass fibers is calculated as the weight average fiber length.

By using the method for manufacturing the thermoplastic resin composition according to this embodiment of the present invention, the increase in molecular weight can be accelerated, productivity improves, and the obtained thermoplastic resin composition exhibits excellent mechanical characteristics and long-term characteristics, enabling favorable use in vehicle components, electrical and electronic components, industrial machinery components and all manner of gears and the like.

<Method for manufacturing Thermoplastic Resin Composition>

A method for manufacturing a thermoplastic resin composition according to a fourth embodiment of the present invention includes a melt-kneading step and a heating step. The manufacturing method of this embodiment may include only the melt-kneading step and the heating step, or may also include one or more other steps. Descriptions of components and the like that are the same as those described for the first embodiment, the second embodiment and the third embodiment may sometimes be omitted.

In the melt-kneading step, at least 5 parts by mass but not more than 100 parts by mass of glass fibers having an average fiber diameter of at least 3 $\mu$m but not more than 9 $\mu$m are added per 100 parts by mass of a thermoplastic resin having a viscosity value VN of at least 80 but not more than 200, and melt-kneading is then conducted to obtain a melt-kneaded product. The melt-kneaded product may contain only the thermoplastic resin and the glass fibers, or may also contain one or more other components.

In the heating step, the melt-kneaded product obtained in the melt-kneading step is heated at a temperature T represented by general formula (I) shown below to obtain a thermoplastic resin composition. In this description, the units for the temperature T and the melting point Tm are °C.

$$\text{Tm-130°C} \leq \text{T} \leq \text{Tm-10°C} \qquad \text{(I)}$$

(wherein Tm represents the melting point of the thermoplastic resin)

In the heating step, 0.05 to 1.0% by mass of water is included relative to 100% by mass of the melt-kneaded product obtained in the melt-kneading step.

In a typical method for manufacturing a thermoplastic resin composition, the thermoplastic resin is first polymerized to increase the molecular weight, fillers such as glass fibers are then added, and the mixture is subjected to melt-kneading to obtain the thermoplastic resin composition.

In contrast, in the manufacturing method of this embodiment of the present invention, a thermoplastic resin of low to medium molecular weight and the glass fibers are melt-kneaded to obtain a melt-kneaded product. As a result, the degree of adhesion at the interface between the glass fibers and the thermoplastic resin improves. Subsequently, by conducting the heating step, thereby subjecting the melt-kneaded product to solid-phase polymerization to increase the molecular weight, the state of improved adhesion at the interface between the glass fibers and the thermoplastic resin is maintained, enabling a thermoplastic resin composition of excellent vibration fatigue resistance to be obtained. Furthermore, by conducting the melt-kneading step and the heating step in this sequence, the state of improved adhesion at the interface between the glass fibers and the thermoplastic resin can be maintained, and dropout of the filler during manufacture becomes less likely.

Each of the steps of the manufacturing method of this embodiment is described below in further detail.

[Melt-Kneading Step]

In the melt-kneading step, glass fibers having an average fiber diameter of at least 3 $\mu$m but not more than 9 $\mu$m are added in a prescribed blend ratio to a thermoplastic resin having a viscosity value VN of at least 80 but not more than 200, and melt-kneading is then conducted to obtain a melt-kneaded product. Specifically, the amount added of the glass fibers per 100 parts by mass of the thermoplastic resin is at least 5 parts by mass but not more than 100 parts by mass, and is preferably at least 10 parts by mass but not more than 100 parts by mass, more preferably at least 15 parts by mass but not more than 100 parts by mass, and even more preferably at least 20 parts by mass but not more than 90 parts by mass.

By ensuring that the blend amount of the glass fibers is at least a large as the above lower limit, a thermoplastic resin composition of enhanced rigidity and strength can be obtained, whereas by ensuring that that the blend amount is not more than the above upper limit, the obtained thermoplastic resin composition exhibits more favorable moldability upon molding in a variety of applications.

A conventional device may be used as the device for conducting the melt-kneading. For example, a melt-kneading apparatus such as a single screw or double screw extruder, a Banbury mixer or a mixing roller may be used. Among these, a multi screw extruder fitted with a venting mechanism (vent) and a side feeder unit is preferred, and a twin screw extruder is particularly preferable.

When the thermoplastic resin and the glass fibers are melt-kneaded in the extruder, the molecular weight of the thermoplastic resin following melt-kneading can be adjusted by appropriate setting of the kneading conditions such as the resin temperature, the degree of pressure reduction and the average residence time in the extruder.

The resin temperature during the melt-kneading, is preferably at least as high as the melting point of the raw material thermoplastic resin but not more than 370°C, more preferably at least 5°C higher than the melting point of the raw material thermoplastic resin but not more than 350°C, even more preferably at least 10°C higher than the melting point of the raw material thermoplastic resin but not more than 340°C, still more preferably at least 15°C higher than the melting point of the raw material thermoplastic resin but not more than 335°C, and most preferably at least 20°C higher than the melting point of the raw material thermoplastic resin but not more than 330°C.

By ensuring that the resin temperature during the melt-kneading is at least as high as the above lower limit, melting of the raw material thermoplastic resin occurs satisfactorily, and the load on the melt-kneading apparatus such as the extruder motor and the like tends to be reduced. Further, by ensuring that the resin temperature during melt-kneading is not more than the above upper limit, degradation of the raw material thermoplastic resin itself tends to be able to be better suppressed.

By appropriate setting of the melt-kneading conditions such as the resin temperature, the degree of pressure reduction and the average residence time during the melt-kneading (for example, during extrusion), the weight average molecular weight of the thermoplastic resin following the melt-kneading can be controlled to a value within a range from low molecular weight to medium molecular weight. Here, a range from low molecular weight to medium molecular weight means a range from at least 10,000 to not more than 70,000, from at least 15,000 to not more than 65,000, or from at least 20,000 to not more than 60,000.

For example, in those cases where polyamide 66 with a melting point of 264°C is used as the raw material thermoplastic resin, the resin temperature during melt-kneading is preferably at least 264°C but not more than 360°C, more preferably at least 270°C but not more than 350°C, even more preferably at least 275°C but not more than 340°C, still more preferably at least 280°C but not more than 335°C, and most preferably at least 285°C but not more than 330°C.

By ensuring that the resin temperature during melt-kneading is at least as high as the above lower limit, the polyamide 66 can melt more thoroughly, and the load on the melt-kneading apparatus such as the extruder motor and the like tends to be reduced. Further, by ensuring that the resin temperature during melt-kneading is no higher than the above upper limit, degradation of the polyamide 66 itself tends to be able to be better suppressed.

In those cases where a polyamide resin other than polyamide 66 is used as the raw material polyamide resin, these temperature ranges may be adjusted appropriately in accordance with the melting point of the polyamide resin. The resin temperature can be measured, for example, by bringing a temperature meter such as a thermocouple into direct contact with the melt-kneaded product exiting the discharge port (spinneret) of the extruder. Adjustments to the resin temperature can be made by adjusting the temperature of the heater fitted to the cylinder of the extruder, or by appropriately adjusting the amount of resin shear heat generation by altering the rotational speed or discharge rate for the extruder.

The average residence time during the melt-kneading is preferably at least 10 seconds but not more than 120 seconds, more preferably at least 20 seconds but not more than 100 seconds, even more preferably at least 25 seconds but not more than 90 seconds, still more preferably at least 30 seconds but not more than 80 seconds, and most preferably at least 35 seconds but not more than 70 seconds.

By ensuring that the average residence time during the melt-kneading is at least as long as the above lower limit, the melt-kneaded product tends to be obtained more efficiently. Further, by ensuring that the average residence time during the melt-kneading is no longer than the above upper limit, the discharge speed (production speed) for the extrusion can be improved to some extent. As a result, the productivity for the thermoplastic resin composition such as a polyamide resin composition tends to be more favorable.

The "average residence time" means the actual residence time in those cases where the residence time inside the melt-kneading apparatus is constant.

Alternatively, in those cases where the residence time is not uniform, the "average residence time" means the average of the shortest residence time and the longest residence time.

The average residence time can be measured using the following method.

A component X is added to the melt-kneading apparatus, and the discharge start time where the color of the component X is most intense and the discharge finish time for the component X are measured. By averaging the measured discharge start time and discharge finish time, the average residence time can be measured. Examples of materials that may be used as the component X include components that can be distinguished from the raw material polyamide resin used in the melt-kneading step, such as a colorant masterbatch, or a resin having a different color from the raw material polyamide resin used in the melt-kneading step.

The average residence time can be adjusted appropriately by altering the discharge rate (discharge speed) and/or the rotational rate of the extruder.

The melt-kneaded product obtained in the melt-kneading may be provided as resin pellets in any of a variety of shapes. Examples of preferred pellet shapes include round shapes, elliptical shapes and elliptical cylindrical shapes, and these shapes may vary depending on the cutting method used during the extrusion processing. Pellets cut using the cutting method known as underwater cutting frequently become round shapes, pellets cut using the cutting method known as hot cutting often form as round or elliptical shapes, and pellets cut using the cutting method known as strand cutting usually become circular cylindrical shapes.

The round-shaped pellets need not be true spherical bodies or complete spheres, and may also be shapes close to spheres. In the case of round-shaped pellets, the preferred size for the pellets, in terms of pellet diameter (the largest value for the diameter in the case of a spherical-like body) is preferably not more than 8 mm, more preferably at least 0.5 mm but not more than 6 mm, and even more preferably at least 1 mm but not more than 5 mm.

The elliptical pellets need not be elliptical bodies or true elliptical bodies, and may also be shapes close to an elliptical shape. In the case of elliptical pellets, the preferred size for the pellets, in terms of the pellet major radius (the largest value for the major radius in the case of an ellipse-like body) is preferably not more than 8 mm, more preferably at least 0.5 mm but not more than 6 mm, and even more preferably at least 1 mm but not more than 5 mm.

The circular cylindrical pellets need not be circular cylindrical bodies or true circular cylindrical bodies, and may also be shapes close to a circular cylindrical shape. In the case of circular cylindrical pellets, the preferred size for the pellets, in terms of the pellet diameter (the largest value for the diameter in the case of a circular cylinder-like body) is preferably at least 1 mm but not more than 3 mm, and the length of the pellets is preferably at least 2 mm but not more than 10 mm.

The raw materials used in the melt-kneading step are described below in further detail.

(Thermoplastic Resin)

There are no particular limitations on the thermoplastic resin, provided the viscosity value VN is at least 80 but not more than 200, preferably at least 100 but not more than 200, and even more preferably at least 130 but not more than 190. By ensuring that the viscosity value VN falls within this range, the degree of polymerization of the thermoplastic resin falls within a suitable range, and the degree of adhesion at the interface between the glass fibers and the thermoplastic resin can be improved. The viscosity value VN is a value measured in accordance with ISO 307 (JIS-K6933). For example, the viscosity value VN can be measured using the method described below in the examples.

The resin component in the thermoplastic resin composition may be composed of only the thermoplastic resin having a viscosity value VN within the above range.

Specifically, a polyamide or polyester is preferred as the thermoplastic resin, and a polyamide is particularly preferable.

Examples of the polyamide include polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecanamide (nylon 11), polydodecanamide (nylon 12), polycaproamide/polyhexamethylene adipamide copolymer (nylon 6/66), polycaproamide/polyhexamethylene terephthalamide copolymer (nylon 6/6T), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene terephthalamide/polyhexamethylene isophthalamide copolymer (nylon 6T/6I), polyhexamethylene terephthalamide/polyundecanamide copolymer (nylon 6T/11), polyhexamethylene terephthalamide/polydodecanamide copolymer (nylon 6T/12), polyhexamethylene adipamide/polyhexamethylene terephthalamide/polyhexamethylene isophthalamide copolymer (nylon 66/6T/6I), polyxylylene adipamide (nylon XD6), polyxylylene sebacamide (nylon XD10), polyhexamethylene terephthalamide/polypentamethylene terephthalamide copolymer (nylon 6T/5T), polyhexamethylene terephthalamide/poly-2-methyl pentamethylene terephthalamide copolymer (nylon 6T/5MT), polypentamethylene terephthalamide/ polydecamethylene terephthalamide copolymer (nylon 5T/10T), polynonamethylene terephthalamide (nylon 9T), polydecamethylene terephthalamide (nylon 10T), and polydodecamethylene terephthalamide (nylon 12T). In these polyamide names, the symbol "/" indicates a copolymer. One of these polyamides may be used alone, or a combination of two or more polyamides may be used.

Among these possibilities, polyamide 6, polyamide 66 or polyamide 610 is preferred, and polyamide 66 is particularly preferable. Polyamide 66 is already a well-known polyamide resin, and is typically produced by the polycondensation of hexamethylenediamine and adipic acid. Alternatively, polyamide 66 may be a copolymer containing one or more monomer units selected from the group consisting of lactams, aminocarboxylic acids, and other diamines and dicarboxylic acids in an amount of less than 30% by mass relative to the total mass of all of the monomer units.

Further, a commercially available product may be used as the polyamide, or the polyamide may be produced using a conventional method. There are no particular limitations on the specific method used for producing the polyamide, and examples include the methods mentioned above for the first embodiment, including methods that involve ring-opening polymerization of a lactam, methods that involve self-condensation of a $\omega$-aminocarboxylic acid, and methods that involve condensation of a diamine and a dicarboxylic acid.

The value [COOH]/[NH2] obtained by dividing the quantity of amino terminal groups by the quantity of carboxyl terminal groups in the polyamide is preferably at least 0.5 but not more than 0.9. By ensuring that the value of [COOH]/[NH2] is at least as large as the above lower limit, a more efficient solid-phase polymerization can be conducted in the subsequent heating step. Further, by ensuring that the value of [COOH]/[NH2] is not more than the above upper limit, the interactions between the glass fiber surfaces and the polyamide terminals become satisfactorily large, thereby improving the physical properties, and particularly the vibration fatigue resistance, of the resulting composition. The quantity of amino terminal groups and the quantity of carboxyl terminal groups can be measured, for example, using 1H-NMR.

The polyester is a polycondensation product of a polyvalent carboxylic acid (dicarboxylic acid) and a polyalcohol (diol). Examples of the polyvalent carboxylic acid include terephthalic acid and 2,6-naphthalenedicarboxylic acid. Examples of the polyalcohol include ethylene glycol, 1,3-propanediol, 1,4-butanediol, and 1,4-cyclohexanedimethanol. One of each of these components may be used alone, or a combination of two or more compounds may be used. Specific examples of the polyester include polyethylene terephthalate, polytrimethylene terephthalate, polybutylene terephthalate, polyethylene naphthalate, and polybutylene naphthalate.

(Glass Fibers)

The glass fibers used are preferably prepared by sizing fibers containing an acrylic resin, an epoxy resin or a urethane resin or the like as the main component with a conventional sizing agent (binder), and the use of glass fibers prepared by sizing fibers containing an acrylic resin or an epoxy resin as the main component with a sizing agent is particularly preferable. Further, the use of glass fibers that have undergone a preliminary treatment with a coupling agent such as an isocyanate compound, organic silane compound, organic titanate compound, organic borane compound or epoxy compound is preferred, as such pretreated glass fibers can be expected to provide further improvements in the mechanical characteristics of the resulting molded articles.

The average fiber length of the glass fibers is preferably at least 100 $\mu$m but not more than 1,000 $\mu$m. By ensuring that the average fiber length of the glass fibers is at least as long as the above lower limit, a more satisfactory reinforcing effect is achieved, and the impact strength and tensile strength of the obtained thermoplastic resin composition can be further improved. On the other hand, by ensuring that the average fiber length of the glass fibers is not more than the above upper limit, a potential problem wherein glass fibers may protrude out of the pellets during pelletization of the obtained melt-kneaded product, causing a reduction in the bulk density of the pellets, becomes less likely.

The average fiber length of the glass fibers can be measured, for example, using the following method.

First, 100 or more glass fibers are randomly selected, and the total mass of those glass fibers is measured. Subsequently, the fiber length of each of the glass fibers is measured by observation using an optical microscope or a scanning electron microscope or the like, and the combined total of those fiber lengths divided by the total mass of the glass fibers is calculated as the weight average fiber length.

The average fiber diameter of the glass fibers is typically at least 3 μm but not more than 9 μm, and is preferably at least 4 μm but not more than 8 μm, and more preferably at least 5 μm but not more than 7 μm. By ensuring that the average fiber diameter of the glass fibers is at least as large as the above lower limit, the strength of the glass fibers is satisfactorily high, and a better reinforcing effect can be achieved. By ensuring that the average fiber diameter of the glass fibers is not more than the above upper limit, the surface area of the glass fibers can be kept satisfactorily high, and the degree of adhesion at the interface between the glass fibers and the resin can be further strengthened.

The average fiber diameter of the glass fibers can be measured, for example, using the following method.

First, 100 glass fibers are randomly selected. Subsequently, the fiber diameter of each of the glass fibers is measured by observation using an optical microscope or a scanning electron microscope or the like, and the value of the combined total of those fiber diameters divided by 100 is calculated as the number average fiber diameter.

The most commonly used glass fibers are called "E glass", and contain about 7% by mass of boron oxide relative to the total mass of the glass fibers. The glass fibers contained in the thermoplastic resin composition of this embodiment of the present invention preferably contain essentially no boron oxide. In other words, the obtained thermoplastic resin composition preferably contains essentially no boron oxide. By ensuring the composition contains essentially no boron oxide, the physical properties and particularly the vibration fatigue resistance can be improved.

Here, the expression "contains essentially no boron oxide" means that the composition either contains absolutely no boron oxide, or contains only a trace amount of a level which does not impair the characteristics (and particularly the vibration fatigue characteristics) of the obtained thermoplastic resin composition. Specifically, the boron oxide content, expressed relative to the total mass of the thermoplastic resin composition, is preferably less than 5% by mass, more preferably less than 1% by mass, even more preferably less than 0.1% by mass, and is most preferably 0% by mass.

(Copper Compound)

In the melt-kneading step, a copper compound may be blended with the thermoplastic resin and the glass fibers.

Examples of the copper compound include copper salts of inorganic acids such as cuprous chloride, cupric chloride, cuprous bromide, cupric bromide, cuprous iodide (copper iodide), copper sulfate, copper phosphate, copper borate, and copper nitrate; and copper salts of organic acids such as copper acetate, copper propionate, copper benzoate, copper adipate, copper terephthalate, copper isophthalate, and copper stearate. Alternatively, copper complex salts coordinated with a chelating agent may also be used. Among the various possibilities, the use of cuprous iodide is preferred. One of these copper compounds may be used alone, or a combination of two or more copper compounds may be used.

The blend amount of the copper compound per 100 parts by mass of the thermoplastic resin is preferably at least 0.0001 parts by mass but not more than 1 part by mass, more preferably at least 0.005 parts by mass but not more than 0.2 parts by mass, and even more preferably at least 0.02 parts by mass but not more than 0.1 parts by mass.

(Metal Halide)

In the melt-kneading step, a metal halide may be blended with the thermoplastic resin and the glass fibers.

A potassium halide is preferred as the metal halide. Specific examples of the potassium halide include potassium iodide, potassium bromide and potassium chloride. Among these, potassium iodide is preferred. One of these potassium halides may be used alone, or a combination of two or more potassium halides may be used.

The blend amount of the metal halide per 100 parts by mass of the thermoplastic resin is preferably at least 0.0001 parts by mass but not more than 1 part by mass, more preferably at least 0.005 parts by mass but not more than 0.2 parts by mass, and even more preferably at least 0.02 parts by mass but not more than 0.15 parts by mass.

(Other Resin Components)

In the manufacturing method of this embodiment, in addition to the thermoplastic resin having a viscosity value within the range described above, another thermoplastic resin having a viscosity value outside of the above range may also be used as a raw material resin, provided the characteristics of the resulting thermoplastic resin composition are not impaired.

Examples of this other thermoplastic resin having a viscosity value outside of the above range include general-purpose resins such as polyethylene, polypropylene, ethylene-propylene copolymers, polystyrene, ABS resins, AS resins and acrylic resins; aliphatic polyamide resins such as polyamide 6 and polyamide 11; as well as polycarbonate, polyphenylene oxide, polyethylene terephthalate, polybutylene terephthalate, and polyphenylene sulfide. These other thermoplastic resins are preferably used in a form that has undergone modification with a modifying agent such as maleic anhydride or a glycidyl group-containing monomer. Among the various resins, those having no functional groups such as polyethylene, polypropylene or ethylene-propylene copolymers are preferably modified before use.

[Heating Step]

In the heating step, the melt-kneaded product is heated at a temperature T represented by general formula (I) shown below to increase the molecular weight of the thermoplastic resin in the melt-kneading product by solid-phase polymerization, thus obtaining a thermoplastic resin composition.

$$Tm-130°C \leq T \leq Tm-10°C \qquad (I)$$

(wherein Tm represents the melting point of the thermoplastic resin)

The melt-kneading product obtained in the melt-kneading step described above may be introduced from the extruder directly into the solid-phase polymerization reactor to conduct the solid-phase polymerization, or may be first wrapped and stored in a paper bag or the like before being added to the solid-phase polymerization reactor to conduct the solid-phase polymerization.

By ensuring that the heating temperature T is at least as high as "the melting point of the thermoplastic resin - 130°C", the polymerization reaction can be accelerated, enabling the polymerization to be conducted more efficiently and the target degree of polymerization to be achieved.

Further, by ensuring that the heating temperature T is no higher than "the melting point of the thermoplastic resin - 10°C", thermal degradation of the thermoplastic resin can be better suppressed, and coloration deterioration of the polymer surface can also be suppressed. Further, fusion of particles of the solid prepolymer can also be better suppressed.

The temperature T is preferably at least Tm-110°C but no higher than Tm-30°C.

The melting point Tm of the thermoplastic resin can be measured in accordance with JIS-K7121. A Diamond DSC apparatus manufactured by PerkinElmer, Inc. or the like can be used as the measurement apparatus. Specifically, the melting point Tm can be measured using the method described below in the examples.

In the heating step, the heating time for the melt-kneaded product at a temperature within the above temperature range is preferably at least 30 minutes but not more than 15 hours. By ensuring that the heating time is at least as long as the above lower limit, the thermoplastic resin composition is able to more efficiently reach the desired viscosity (degree of polymerization of the thermoplastic resin). Further, by ensuring that the heating time is no longer than the above upper limit, fusion of lower degree condensates during the solid-phase polymerization and coloration (yellowing) of the composition can be more effectively suppressed.

The solid-phase polymerization reaction may be conducted using either a continuous method or a batch method. The solid-phase polymerization reactor may be either a vertical or a horizontal reactor. **In** order to improve the reaction uniformity, the solid-phase polymerization reaction is preferably conducted under stirring. The polymerization reactor may have a rotating main body, or may be stirred using a stirring blade or the like. Of the various possibilities, the solid-phase polymerization reaction in the heating step is preferably conducted continuously.

Furthermore, water is included in the solid-phase polymerization reaction during the heating step. The amount of water, relative to a value of 100% by mass of the melt-kneaded product pellets obtained in the melt-kneading, is typically within a range from 0.05 to 1.0% by mass, preferably from 0.06 to 0.9% by mass, more preferably from 0.07 to 0.8% by mass, and particularly preferably from 0.11 to 0.8% by mass. By including water in the above amount during the solid-phase polymerization reaction, coloration (yellowing) of the composition can be suppressed and the vibration fatigue resistance can be improved.

The amount of water described above may represent the proportion of water at the start of heating in the heating step.

The addition of water in the solid-phase polymerization reaction may be performed, for example, by adding the water following charging of the solid-phase polymerization apparatus with the melt-kneading product. In order to ensure uniform adhesion of water to the melt-kneaded product, the water addition is preferably conducted while stirring the melt-kneaded product. Furthermore, the water may also be added by subjecting the melt-kneaded product to a preliminary water absorption treatment prior to conducting the solid-phase polymerization reaction.

The solid-phase polymerization reaction in the heating step may be conducted either under vacuum or under a gas stream, and among the various possibilities, is preferably conducted under a stream of an inert gas such as nitrogen gas.

In those cases where the solid-phase polymerization is conducted under an inert gas stream, the reaction is preferably conducted in an inert gas atmosphere with an oxygen concentration of not more than 5 ppm. By ensuring that the oxygen concentration is not more than the above upper limit, oxidative degradation of the obtained thermoplastic resin composition becomes less likely. As a result, reactions that cause molecular chain cleavage, and any reduction in the speed with which the molecular weight increases (the polymerization reaction rate) become unlikely, and a thermoplastic resin composition of the prescribed molecular weight can be more easily obtained. Further, any deterioration in the mechanical characteristics or yellowing of the obtained thermoplastic resin composition can be more effectively suppressed.

In those cases where the solid-phase polymerization is conducted under an inert gas stream, the reaction is preferably conducted while the melt-kneaded product forms a particle layer, and the inert gas is supplied at a prescribed rate at a prescribed height position of the particle layer.

Specifically, the solid-phase polymerization reaction is preferably conducted while the inert gas is provided from a height location that is at least 0 times but not more than 0.8 times, and preferably at least 0 times but not more than 0.5 times the height h of the particle layer, at a rate of at least 0.1 Nm3/hour but not more than 10 Nm3/hour, and preferably at least 0.14 Nm3/hour but not more than 10 Nm3/hour, per 1 kg of the melt-kneaded product.

The height h of the particle layer is defined in the following manner.

The solid-phase polymerization reactor is opened, an operational equivalent amount of the particles or pellets of the melt-kneaded product is placed in the reactor at normal temperature and atmospheric pressure, and with a prescribed amount of the inert gas passing through the reactor, the height of the particle layer is measured relative to the bottom of the reactor having the gas supply port (h=0), and this height is deemed h.

In those cases where the surface at the top of the particle layer is not uniform, the average of the highest height and the lowest height is deemed the height h.

From the viewpoints of further improving the vibration fatigue resistance and better suppressing coloration, the ratio of the viscosity value VN for the thermoplastic resin composition following the heating step relative to the viscosity value VN of the thermoplastic resin added in the melt-kneading step (viscosity value VN for the thermoplastic resin composition following the heating step / viscosity value VN of the thermoplastic resin added in the melt-kneading step) is preferably within a range from 1.0 to 5.0, more preferably from 1.1 to 4.0, and even more preferably from 1.2 to 3.0.

<Thermoplastic Resin Composition>

The thermoplastic resin composition obtained using the manufacturing method of this embodiment has a viscosity value VN that is preferably at least 200 but not more than 350, more preferably at least 210 but not more than 330, and even more preferably at least 220 but not more than 300. By ensuring that VN is at least as large as the above lower limit, the wear resistance is more favorable, whereas by ensuring that VN is not more than the above upper limit, the moldability is more favorable when molding is conducted in any of various applications.

The amount of the glass fibers in the thermoplastic resin composition is preferably at least 5 parts by mass but not more than 100 parts by mass, and more preferably at least 15 parts by mass but not more than 100 parts by mass, per 100 parts by mass of the thermoplastic resin. By ensuring that the amount of the glass fibers is at least as large as the above lower limit, the rigidity and strength of the thermoplastic resin composition can be further improved, whereas by ensuring that the amount of the glass fibers is not more than the above upper limit, the moldability is more favorable when the thermoplastic resin composition is subjected to molding in any of various applications.

The average fiber length of the glass fibers contained in the thermoplastic resin composition is preferably at least 100 $\mu$m but not more than 1,000 $\mu$m, more preferably at least 200 $\mu$m but not more than 600 $\mu$m, and even more preferably at least 300 $\mu$m but not more than 500 $\mu$m. By ensuring that the average fiber length of the glass fibers is at least as large as the above lower limit, a more satisfactory reinforcing effect is achieved, and the impact strength and tensile strength of the obtained thermoplastic resin composition can be further improved. On the other hand, by ensuring that the average fiber length of the glass fibers is no longer than the above upper limit, a potential problem wherein glass fibers may protrude out of the pellets during pelletization of the thermoplastic resin composition, causing a reduction in the bulk density of the pellets, can be better suppressed.

The average fiber length of the glass fibers contained in the thermoplastic resin composition can be measured, for example, using the following method.

First, the thermoplastic resin composition is dissolved in a solvent such as formic acid that is capable of dissolving the thermoplastic resin. Subsequently, 100 or more glass fibers are randomly selected from the resulting insoluble fraction, and the total mass of those glass fibers is measured. Subsequently, the fiber length of each of the glass fibers is measured by observation using an optical microscope or a scanning electron microscope or the like, and the value of the combined total of those fiber lengths divided by the total mass of the glass fibers is calculated as the weight average fiber length.

The thermoplastic resin composition obtained using the manufacturing method of this embodiment exhibits excellent vibration fatigue resistance, and can therefore be used favorably, for example, in vehicle components, electrical and electronic components, industrial machine components, and all manner of gears and the like.

Examples

The present invention is described below in further detail using a series of specific examples and comparative examples, but the present invention is not limited to the following examples. The raw materials and the measurement methods such as the physical property tests used in the examples and comparative examples were as described below.

[Raw Materials]

(A1) Crystalline Polyamide

Production Example 1-1: Polyamide 66-1 (A1-1)

First, 15,000 g of an equimolar salt of adipic acid and hexamethylenediamine, and a 0.5 mol% excess of adipic acid relative to the total equimolar salt component were dissolved in 15,000 g of distilled water to obtain a 50% by mass aqueous solution of raw material monomers. The thus obtained aqueous solution was placed in an autoclave with an internal capacity of 40 L, and the inside of the autoclave was flushed with nitrogen. This aqueous solution was stirred under a temperature of 110 to 150°C while water vapor was gradually removed to concentrate the solution to a solution concentration of 70% by mass. Subsequently, the internal temperature was raised to 220°C. At this time, the pressure inside the autoclave increased to 1.8 MPa. Reaction was then conducted for one hour while water vapor was gradually removed to maintain the pressure at 1.8 MPa, until the internal temperature reached 270°C.

Subsequently, the pressure was reduced down to atmospheric pressure over a period of about one hour, and after atmospheric pressure was attained, the product was discharged in strand form from a bottom nozzle, cooled in water and then cut, yielding crystalline polyamide pellets. The thus obtained pellets were dried at 90°C under a nitrogen gas stream for 4 hours. These crystalline polyamide pellets had a formic acid relative viscosity of 45, a melting point of 265°C, and a crystallization temperature of 220°C.

Production Example 1-2: Polyamide 66-2 (A1-2)

Ten kg of the above polyamide 66-1 pellets were placed in a cone-shaped ribbon vacuum dryer (product name: RIBOCONE RM-10V, manufactured by Okawara Mfg. Co., Ltd.), and the inside was flushed thoroughly with nitrogen. Stirring was then conducted with nitrogen passing through the dryer at 1 L/minute, while the pellets were heated at a temperature of 190°C for 6 hours. Subsequently, the nitrogen flow was continued while the temperature was lowered, and when the temperature reached about 50°C, the pellets were removed from the dryer. These crystalline polyamide pellets had a formic acid relative viscosity of 130.

Production Example 1-3: Polyamide 66-3 (A1-3)

With the exception of heating the pellets at a temperature of 205°V for 8 hours, pellets were obtained in the same manner as Production Example 1-2. The resulting crystalline polyamide pellets had a formic acid relative viscosity of 250.

(B1) Glass Fibers

B1-1: Glass Chopped Strands-1

Product name: CS-3DE-456S, manufactured by Nitto Boseki Co., Ltd. (glass fiber number average diameter: 7 $\mu$m, glass fiber weight average length: 3 mm, loss on ignition: 36.5, boron content: 13,000 ppm by mass)

B1-2: Glass Chopped Strands-2

Product name: ECS03T-289DE, manufactured by Nippon Electric Glass Co., Ltd. (glass fiber number average diameter: 7 $\mu$m, glass fiber weight average length: 3 mm, loss on ignition: 13.9, boron content: 14,000 ppm by mass)

B1-3: Glass Chopped Strands-3

Product name: CS-3PE-454, manufactured by Nitto Boseki Co., Ltd. (glass fiber number average diameter: 13 $\mu$m, glass fiber weight average length: 3 mm, loss on ignition: 29.2, boron content: 13,000 ppm by mass)

B1-4: Glass Chopped Strands-4

Glass fibers prepared in the Production Example 1-4 described below (glass fiber number average diameter: 7 $\mu$m, glass fiber weight average length: 3 mm, loss on ignition: 32.7, boron content: 0 ppm by mass)

Production Example 1-4: Glass Chopped Strands-4

Using water as a diluent, a mixture was prepared containing, in terms of solid fraction equivalents, 2% by mass of a polyurethane resin (product name: VONDIC (a registered trademark) 1050, an aqueous solution with a solid fraction of 50% by mass (manufactured by DIC Corporation)), 0.6% by mass of $\gamma$-aminopropyltriethoxysilane (product name: KBE-903 (manufactured by Shin-Etsu Chemical Co., Ltd.)), and 0.1% by mass of a lubricant (product name: Carnauba Wax (manufactured by S.KATO & Co., Ltd.), and the total mass was adjusted to 100% by mass with water, thus obtaining a glass fiber sizing agent.

Glass raw materials were blended to prepare a mixture containing 58% by mass of $SiO_2$, 14% by mass of $Al_2O_3$, 21% by mass of CaO, 2% by mass of MgO, and 5% by mass of $Na_2O+K_2O$, this blend was subjected to melt spinning to obtain glass long fibers with a number average fiber diameter of 7 $\mu$m, and the glass fiber sizing agent described above was then adhered to the fibers. In other words, as the glass fibers were wound onto a rotating drum, an applicator installed at a predetermined location was used to apply the sizing agent to the glass fibers.

Subsequently, these glass fibers were dried, yielding a roving of bundled glass fibers (glass roving) that had been surface-treated with the above glass fiber sizing agent. Bundles of 1,000 glass fibers were produced. This glass roving was cut to a length of 3 mm to obtain glass chopped strands-4. These chopped strands were used as glass fibers.

Component (C1)

Copper (I) iodide (manufactured by FUJIFILM Wako Pure Chemical Corporation)

Component (D1)

Potassium iodide (manufactured by FUJIFILM Wako Pure Chemical Corporation)

Other Components

Antioxidant: Irganox (a registered trademark) 1098 (Manufactured by BASF Corporation)
Colorant: MITSUBISHI (a registered trademark) Carbon Black #2600 (manufactured by Mitsubishi Chemical Corporation)

[Example 1-1]

Twin screw extruder (ZSK-40MC, manufactured by Coperion GmbH (Germany)) was used as the extruder. This twin screw extruder has an upstream supply port provided on the first barrel from the upstream side, and a downstream supply port provided on the eighth barrel. Further, L/D (length of extruder cylinder / diameter of extruder cylinder) = 48 (number of barrels: 12). In this extruder, the temperature from the upstream supply port to the barrel located one position upstream from the barrel having the downstream supply port was set to 310 to 320°C, the temperature from the barrel having the downstream supply port until the final barrel was set to 290°C, the screw rotational rate was set to 200 rpm, the discharge rate was set to 80 kg/hour, and the degree of pressure reduction was set to -0.08 MPa.

Under these conditions, the crystalline polyamide (A1), the component (C1), the component (D1), and any other components were supplied from the upstream port in the formulation shown in Table 1, the glass fibers (B1) were supplied from the downstream supply port in an amount shown in Table 1, and melt-kneading was conducted to produce resin composition pellets.

Eleven kg of the obtained pellets were placed in a thermostatic chamber (product name: Perfect Oven PHH-202M, manufactured by ESPEC Corporation), and the internal atmosphere was flushed thoroughly with nitrogen.

With the nitrogen flow maintained at 1 L/minute, the pellets were heated at 210°C for 2 hours to conduct a solid-phase polymerization. Subsequently, the temperature was lowered while the nitrogen flow was continued, and when the temperature reached about 50°C, the pellets were removed from the chamber.

Using an injection molding apparatus PS-40E (manufactured by Nissei Plastic Industrial Co., Ltd.) with the mold temperature set to 80°C and the cylinder temperature set to 290°C, the obtained pellets were used to mold test pieces of the multipurpose test piece type A prescribed in ISO 3167. These test pieces were used to evaluate various mechanical properties, the vibration fatigue characteristics, and the wear characteristics and the like. Further, the molar ratio between the copper element content and the halogen element content was calculated as I/Cu based on the amounts used of the copper (I) iodide and the potassium iodide.

[Examples 1-2 to 1-8]

With the exceptions of altering the types and blend amounts of the crystalline polyamide (A1), the glass fibers (B1), the component (C1), the component (D1) and any other components, and the solid-phase polymerization time as shown in Tables 1 to 4, resin composition pellets and test pieces of Examples 1-2 to 1-18 were produced in the same manner as Example 1-1, with the test pieces subsequently used for the various tests.

In Tables 1 to 4, a masterbatch containing the component (C1) and the component (D1) is abbreviated as "C1·D1 masterbatch". The C1·D1 masterbatch was obtained by mixing 90 parts by mass of polyamide 6 (SF1013A, manufactured by UBE Corporation), 1.8 parts by mass of the component (C1) and 18 parts by mass of the component (D1), and then melt-kneading the mixture using a twin screw extruder (TEM35ø twin screw extruder, manufactured by Toshiba Machine Co., Ltd.) under conditions including a screw rotational rate of 200 rpm and a discharge rate of 90 kg/h. The melt-kneading in the twin extruder was able to be conducted in a stable manner. The molar ratio between the halogen content and the copper content (halogen/copper) in the C1·D1 masterbatch was 12/1.

[Comparative Examples 1-1 to 1-5]

Using the same twin screw extruder as Example 1-1, melt kneading was conducted under conditions including a temperature of 300°C from the upstream supply port to the die, a screw rotational rate of 200 rpm and a discharge rate of 15 kg/hour. Under these conditions, the crystalline polyamide (A1), the component (C1), the component (D1), and any other components were supplied from the upstream port in the formulations shown in Tables 5 and 6, the glass fibers (B1) were supplied from the downstream supply port in various amounts shown in Tables 5 and 6, and melt-kneading was conducted to produce resin composition pellets. The thus obtained resin composition pellets were used to mold multipurpose type A test pieces prescribed in ISO 3167, using the same injection molding apparatus as Example 1-1 with the mold temperature set to 80°C and the cylinder temperature set to 290°C. These test pieces were used to evaluate various mechanical properties, the vibration fatigue characteristics, and the wear characteristics and the like.

[Comparative Example 1-6]

Using the same twin screw extruder as Example 1-1, melt kneading was conducted under conditions including a temperature of 300°C from the upstream supply port to the die, a screw rotational rate of 200 rpm and a discharge rate of 15 kg/hour. Under these conditions, the crystalline polyamide (A1), the component (C1), the component (D1), and any other components were supplied from the upstream port in the formulation shown in Table 6, the glass fibers (B1) were supplied from the downstream supply port in the amount shown in Table 6, and melt-kneading was conducted to produce resin composition pellets. Subsequently, 11 kg of the obtained pellets were placed in a cone-shaped ribbon vacuum dryer (product name: RIBOCONE RM-10V, manufactured by Okawara Mfg. Co., Ltd.), and the inside was flushed thoroughly with nitrogen. Stirring was then conducted with nitrogen passing through the dryer at 1 L/minute, while the pellets were heated at a temperature of 210°C for 2 hours to conduct a solid-phase polymerization. Subsequently, the nitrogen flow was continued while the temperature was lowered, and when the temperature reached about 50°C, the pellets were removed from the dryer. The thus obtained resin composition pellets were used to mold multipurpose type A test pieces prescribed in ISO 3167, using the same injection molding apparatus as Example 1-1 with the mold temperature set to 80°C and the cylinder temperature set to 290°C. These test pieces were used to evaluate various mechanical properties, the vibration fatigue characteristics, and the wear characteristics and the like.

[Example 1-19]

Using an injection molding apparatus α50i-A (manufactured by FANUC Corporation), the resin composition pellets obtained in Example 1-8 were subjected to injection molding under conditions including a cylinder temperature of 290°C, a mold temperature of 80°C, a maximum injection pressure of 120 MPa, an injection time of 10 seconds and a cooling time of 60 seconds, thus obtaining a worm wheel gear of module 3.0 with 50 teeth, a tooth thickness of 5 mm, and a tooth width of 15 mm. The worm wheel gear was used to conduct a gear durability test.

[Examples 1-20 and 1-21, Comparative Examples 1-7 and 1-8]

With the exception of replacing the resin composition used with the resin composition pellets shown in Table 7, worm wheel gears were molded from the resin composition pellets of Example 1-11, Example 1-16, Comparative Example 1-2 and Comparative Example 1-6 using the same procedure as that described in Example 1-19.

[Measurement Methods]

<Glass Fibers Loss on Ignition (Surface Treatment Agent Adhesion Amount)>

Ten g of the glass fibers were weighed precisely, and were then heated in an electric furnace at 650°C for one hour. The loss in mass during this period was deemed the loss on ignition for the glass fibers. This operation was conducted 10 times using a 10 g sample of different glass fibers each time, and an average value M and standard deviation $\sigma$ were calculated for the loss on ignition.

<Formic Acid Relative Viscosity VR>

The formic acid relative viscosity (VR) is obtained by comparing the viscosity of a solution (soluble component) prepared by dissolving the fiber-reinforced polyamide resin composition obtained in the example or comparative example in formic acid, and the viscosity of formic acid itself. Specifically, the measurements are conducted as prescribed in ASTM-D789. More specifically, the VR was measured at 25°C using a solution prepared by dissolving the fiber-reinforced polyamide resin composition in 90% by mass formic acid (containing 10% by mass of water) such that the soluble component within the fiber-reinforced polyamide resin composition represents 8.4% by mass.

<Quantification of Formic Acid Insoluble Component>

The formic acid insoluble component within each of the polyamide resin compositions produced in Examples 1-1 to 1-18 and Comparative Examples 1-1 to 1-6 was determined in the manner described below.
First, a solution prepared by adding the fiber-reinforced polyamide resin composition to 90% by mass formic acid (containing 10% by mass of water) and stirring the mixture for a full day and night was filtered using a membrane filter with a pore size of 0.65 $\mu$m, the formic acid insoluble component retained on the filter paper was isolated, residual solvent was removed from this isolated formic acid insoluble component by drying for a full day and night, the mass of the obtained dried product was then measured, and the amount of the formic acid insoluble component was determined using the formula shown below.

Formic acid insoluble component (% by mass) = dried product mass (g) / mass of fiber-reinforced polyamide resin composition dissolved in formic acid (g) $\times$ 100

Moreover, the ash percentage of the sample was measured in advance based on the prescription of ISO 3451-4, and the formula shown below was then used to determine the ratio of the mass of the formic acid insoluble component relative to the ash percentage.

Formic acid insoluble component relative to ash percentage (% by mass) = formic acid insoluble component (% by mass) / ash percentage (% by mass) $\times$ 100

Using the above procedure, the ratio of the mass of the formic acid insoluble component relative to the ash percentage was measured 10 times, and the average value of those measurements was calculated.

<Short GF Proportion>

The glass fiber-reinforced polyamide resin composition pellets obtained in each of Examples 1-1 to 1-18 and Comparative Examples 1-1 to 1-6 were heated at 650°C for 2 hours to incinerate only the polyamide, the residue was then inspected under an optical microscope, the lengths of 400 randomly selected reinforcing fibers were measured using an image analysis device, and the proportion of glass fibers having a length of 250 $\mu$m or shorter was calculated.

<Unfibrillated Number>

One kg of the glass fiber-reinforced polyamide resin composition pellets obtained in each of Examples 1-1 to 1-18 and Comparative Examples 1-1 to 1-6 were weighed precisely, those pellets in which a glass fiber bundle had protruded from the pellet cross-section by 0.5 mm or more were differentiated as unfibrillated pellets, and the number of those unfibrillated pellets was counted. This operation was conducted 10 times using a 1 kg sample of different pellets each time, and the average of those 10 measurements was deemed the unfibrillated number.

<Tensile Test>

Using the type A test pieces obtained in each of Examples 1-1 to 1-18 and Comparative Examples 1-1 to 1-6, a tensile test was conducted in accordance with ISO 527 at a test speed of 50 mm/min, and the tensile strength (MPa) was measured.

Further, a total of 20 of the same type A test pieces were molded, the tensile strength of each test piece was measured, and the coefficient of variation for the tensile strength was calculated using the formula shown below.

$$CV_{tensile} = (\sigma_{tensile}/\mu_{tensile}) \times 100$$

In this formula, $\sigma_{tensile}$ represents the standard deviation for the tensile strength, and $\mu_{tensile}$ represents the arithmetic mean for the tensile strength.

<Vibration Fatigue>

The resin composition pellets obtained in each of Examples 1-1 to 1-18 and Comparative Examples 1-1 to 1-6 were used to prepare a JIS 7139 small ISO test piece (thickness: 3 mm) prescribed in ISO 294-1 using an injection molding device PS-40E (manufactured by Nissei Plastic Industrial Co., Ltd.) with the injection + pressure holding time set to 10 seconds, the mold temperature set to 80°C and the cylinder temperature set to 290°C, and this test piece was then subjected to a vibration fatigue test using a Shimadzu servo pulser (EHF-FV1 OKN-1 OLA) manufactured by Shimadzu Corporation. The test conditions included a frequency of 20 Hz, a sinusoidal waveform, a temperature of 120°C, a stress ratio of 0.1, a chuck separation of 30 mm, and a pressure imparted to the sample of 60 MPa, and the number of vibration repetitions before the sample ruptured was determined.

<Friction Coefficient and Wear Depth>

The type A test pieces obtained in each of Examples 1-1 to 1-18 and Comparative Examples 1-1 to 1-6 were subjected to a sliding test using a reciprocating dynamic friction wear tester (model AFT-15MS, manufactured by Toyo Seimitsu Co., Ltd.) and an SUS304 test piece (a sphere of diameter 5 mm) as the partner material, under conditions including a linear speed of 30 mm/second, a reciprocating distance of 20 mm, a temperature of 23°C, a humidity of 50%, a load of 1.5 kg, and a total of 5,000 back and forth repetitions, and the friction coefficient was determined. Following the sliding test, the wear depth in the sample in the central region of the wear mark was measured using a surface roughness meter (575A-30, manufactured by Toyo Seimitsu Co., Ltd.). The results of these tests are shown in Tables 8 to 13 as the "friction coefficient (23°C)" and the "wear depth (23°C)".

<Black Spot Blemishes>

The resin composition pellets obtained in each of Examples 1-1 to 1-18 and Comparative Examples 1-1 to 1-6 were injection molded using an injection molding apparatus (FN-3000, screw diameter: 40 mm, manufactured by Nissei Plastic Industrial Co., Ltd.) under molding conditions including a cylinder temperature of 290°C, a mold temperature of 80°C, injection pressure of 65 MPa, an injection time of 15 seconds, a cooling time of 15 seconds, and a screw rotational rate of 200 rpm to mold a flat sheet with of width 80 mm × length 120 mm × thickness 8 mm, and the number of black spot blemishes was counted.

<Gear Durability Test>

Using the worm wheel gears obtained in each of Examples 1-19 to 1-21 and Comparative Examples 1-7 and 1-8, tests were conducted using a gear durability tester manufactured by Toshiba Machine Co., Ltd. The resin worm wheel gear was combined with an SUS304 worm, with the worm wheel gear acting as the drive side and the worm acting as the driven side. The intermeshing portions were coated with a grease (Multemp CPL, manufactured by Kyodo Yushi Co., Ltd.) and then rotated manually to spread the grease completely across the worm and the worm wheel. The gear on the drive side was then rotated under the conditions listed below, and the number of repetitions (durability repetitions) until breakage of the gear was measured.

Test conditions: temperature 23°C, humidity: 50%, torque: 25 N/m, rotational rate: 30 rpm

After one outward and one return rotation, rotation was paused for an interval of 1 second, and rotation was then conducted in the opposite direction.

<Weight Loss Upon 100,000 Rotations>

Using the worm wheel gears obtained in each of Examples 1-19 to 1-21 and Comparative Examples 1-7 and 1-8, the gear durability tester described above was used to perform 100,000 ($1.0 \times 10^5$) rotations, the weight W1 of the worm wheel gear was then measured, and the weight loss (% by mass) relative to the weight WO prior to the start of the test was calculated using the following formula.

$$\text{Weight loss} = [(W0-W1)/W0] \times 100$$

[Table 1]

| Example | | | | 1-1 | 1-2 | 1-3 | 1-4 | 1-5 |
|---|---|---|---|---|---|---|---|---|
| Composition | | A1-1 | parts by mass | 85 | 70 | 50 | 85 | 70 |
| | | A1-2 | parts by mass | - | - | - | - | - |
| | | A1-3 | parts by mass | - | - | - | - | - |
| | | B1-1 | parts by mass | 15 | 30 | 50 | 15 | 30 |
| | | B1-2 | parts by mass | - | - | - | - | - |
| | | B1-3 | parts by mass | - | - | - | - | - |
| | | B1-4 | parts by mass | - | - | - | - | - |
| | | C1 | parts by mass | 0.08 | 0.08 | 0.08 | 0.08 | 0.08 |
| | | D1 | parts by mass | 0.8 | 0.8 | 0.8 | 0.8 | 0.8 |
| | | C1·D1 masterbatch | parts by mass | - | - | - | - | - |
| | | Irganox1098 | parts by | 0.05 | 0.05 | 0.05 | 0.05 | 0.05 |

| | | | | | | |
|---|---|---|---|---|---|---|
| | mass | | | | | |
| Colorant | parts by mass | - | - | - | - | - |
| Total | parts by mass | 100.93 | 100.93 | 100.93 | 100.93 | 100.93 |
| Ash content | % by mass | 14.9 | 29.7 | 49.5 | 14.9 | 29.7 |
| I/Cu | - | 12 | 12 | 12 | 12 | 12 |
| Solid-phase polymerization time following extrusion | hours | 2 | 2 | 2 | 4 | 4 |

[Table 2]

| Example | | | 1-6 | 1-7 | 1-8 | 1-9 |
|---|---|---|---|---|---|---|
| Composition | A1-1 | parts by mass | 50 | 85 | 70 | 50 |
| | A1-2 | parts by mass | - | - | - | - |
| | A1-3 | parts by mass | - | - | - | - |
| | B1-1 | parts by mass | 50 | 15 | 30 | 50 |
| | B1-2 | parts by mass | - | - | - | - |
| | B1-3 | parts by mass | - | - | - | - |
| | B1-4 | parts by mass | - | - | - | - |
| | C1 | parts by mass | 0.08 | 0.08 | 0.08 | 0.08 |
| | D1 | parts by mass | 0.8 | 0.8 | 0.8 | 0.8 |
| | C1·D1 masterbatch | parts by mass | - | - | - | - |
| | Irganox1098 | parts by | 0.05 | 0.05 | 0.05 | 0.05 |

| | | mass | | | | |
|---|---|---|---|---|---|---|
| Colorant | parts by mass | - | - | - | - |
| Total | parts by mass | 100.93 | 100.93 | 100.93 | 100.93 |
| Ash content | % by mass | 49.5 | 14.9 | 29.7 | 49.5 |
| I/Cu | - | 12 | 12 | 12 | 12 |
| Solid-phase polymerization time following extrusion | hours | 4 | 5 | 5 | 5 |

[Table 3]

| Example | | | | 1-10 | 1-11 | 1-12 | 1-13 | 1-14 |
|---|---|---|---|---|---|---|---|---|
| Composition | A1-1 | parts by mass | | 85 | 70 | 50 | 85 | 70 |
| | A1-2 | parts by mass | | - | - | - | - | - |
| | A1-3 | parts by mass | | - | - | - | - | - |
| | B1-1 | parts by mass | | - | - | - | - | - |
| | B1-2 | parts by mass | | 15 | 30 | 50 | - | - |
| | B1-3 | parts by mass | | - | - | - | 15 | 30 |
| | B1-4 | parts by mass | | - | - | - | - | - |
| | C1 | parts by mass | | 0.08 | 0.08 | 0.08 | 0.08 | 0.08 |
| | D1 | parts by mass | | 0.8 | 0.8 | 0.8 | 0.8 | 0.8 |
| | C1·D1 masterbatch | parts by mass | | - | - | - | - | - |
| | Irganox1098 | parts by | | 0.05 | 0.05 | 0.05 | 0.05 | 0.05 |

|  |  | mass |  |  |  |  |  |
|---|---|---|---|---|---|---|---|
|  | Total | parts by mass | 100.93 | 100.93 | 100.93 | 100.93 | 100.93 |
|  | Ash content | % by mass | 14.9 | 29.7 | 49.5 | 14.9 | 29.7 |
|  | Colorant | parts by mass | - | - | - | - | - |
|  | I/Cu | - | 12 | 12 | 12 | 12 | 12 |
|  | Solid-phase polymerization time following extrusion | hours | 5 | 5 | 5 | 5 | 5 |

[Table 4]

| Example | | | 1-15 | 1-16 | 1-17 | 1-18 |
|---|---|---|---|---|---|---|
| Composition | A1-1 | parts by mass | 50 | 70 | 70 | 70 |
| | A1-2 | parts by mass | - | - | - | - |
| | A1-3 | parts by mass | - | - | - | - |
| | B1-1 | parts by mass | - | - | 30 | 30 |
| | B1-2 | parts by mass | - | - | - | - |
| | B1-3 | parts by mass | 50 | - | - | - |
| | B1-4 | parts by mass | - | 30 | - | - |
| | C1 | parts by mass | 0.08 | 0.08 | 0.08 | - |
| | D1 | parts by mass | 0.8 | 0.8 | 0.8 | - |
| | C1·D1 masterbatch | parts by mass | - | - | - | 5 |
| | Irganox1098 | parts by | 0.05 | 0.05 | 0.05 | 0.05 |

| | | mass | | | | |
|---|---|---|---|---|---|---|
| | Total | parts by mass | 100.93 | 100.93 | 100.93 | 105.05 |
| | Ash content | % by mass | 49.5 | 29.7 | 29.7 | 28.6 |
| | Colorant | parts by mass | - | - | 1 | - |
| | I/Cu | - | 12 | 12 | 12 | 12 |
| | Solid-phase polymerization time following extrusion | hours | 5 | 5 | 5 | 5 |

[Table 5]

| Comparative Example | | | 1-1 | 1-2 | 1-3 | 1-4 |
|---|---|---|---|---|---|---|
| Composition | A1-1 | parts by mass | - | - | 70 | - |
| | A1-2 | parts by mass | 70 | - | - | - |
| | A1-3 | parts by mass | - | 70 | - | 70 |
| | B1-1 | parts by mass | 30 | 30 | 30 | - |
| | B1-2 | parts by mass | - | - | - | 30 |
| | B1-3 | parts by mass | - | - | - | - |
| | B1-4 | parts by mass | - | - | - | - |
| | C1 | parts by mass | 0.08 | 0.08 | 0.08 | 0.08 |
| | D1 | parts by mass | 0.8 | 0.8 | 0.8 | 0.8 |
| | C1·D1 masterbatch | parts by mass | - | - | - | - |
| | Irganox1098 | parts by | 0.05 | 0.05 | 0.05 | 0.05 |

|  | | mass | | | | |
|---|---|---|---|---|---|---|
| Total | parts by mass | 100.93 | 100.93 | 100.93 | 100.93 |
| Ash content | % by mass | 29.7 | 29.7 | 29.7 | 29.7 |
| Colorant | parts by mass | - | - | - | - |
| I/Cu | - | 12 | 12 | 12 | 12 |
| Solid-phase polymerization time following extrusion | hours | - | - | - | - |

[Table 6]

| Comparative Example | | | 1-5 | 1-6 |
|---|---|---|---|---|
| Composition | A1-1 | parts by mass | - | 70 |
| | A1-2 | parts by mass | - | - |
| | A1-3 | parts by mass | 70 | - |
| | B1-1 | parts by mass | - | 30 |
| | B1-2 | parts by mass | - | - |
| | B1-3 | parts by mass | - | - |
| | B1-4 | parts by mass | 30 | - |
| | C1 | parts by mass | 0.08 | 0.08 |
| | D1 | parts by mass | 0.8 | 0.8 |
| | C1·D1 masterbatch | parts by mass | - | - |
| | Irganox1098 | parts by | 0.05 | 0.05 |

| | | | |
|---|---|---|---|
| | mass | | |
| Total | parts by mass | 100.93 | 100.93 |
| Ash content | % by mass | 29.7 | 29.7 |
| Colorant | parts by mass | - | - |
| I/Cu | - | 12 | 12 |
| Solid-phase polymerization time following extrusion | hours | - | - |

[Table 7]

| | | Example | | | Comparative Example | |
|---|---|---|---|---|---|---|
| | | 1-19 | 1-20 | 1-21 | 1-7 | 1-8 |
| Resin composition used | | Example | | | Comparative Example | |
| | | 1-8 | 1-11 | 1-16 | 1-2 | 1-6 |
| Gear tester Durability repetitions | $\times 10^5$ repetitions | 15.8 | 17.1 | 17.3 | 3.4 | 3.9 |
| Weight loss upon 100,000 rotations | % by mass | 0.5 | 0.3 | 0.3 | 3.9 | 3.2 |

[Table 8]

| Example | | 1-1 | 1-2 | 1-3 | 1-4 | 1-5 |
|---|---|---|---|---|---|---|
| Evaluations | Formic acid relative viscosity | - | 116 | 115 | 113 | 154 | 153 |
| | Formic acid insoluble component | % by mass | 16.1 | 32.1 | 52.2 | 16.1 | 31.8 |
| | Formic acid insoluble component relative to ash content | % by mass | 108.3 | 108.0 | 105.4 | 108.3 | 107.0 |
| | Short GF proportion | % by mass | 29.8 | 42.6 | 43.9 | 29.9 | 42.9 |
| | Tensile strength arithmetic mean $\mu_{tensile}$ | MPa | 147 | 182 | 210 | 152 | 191 |
| | Tensile strength Coefficient of variation $CV_{tensile}$ | - | 0.28 | 0.22 | 0.21 | 0.18 | 0.17 |
| | Unfibrillated number | number | 0 | 0 | 0 | 0 | 0 |
| | Vibration fatigue | repetitions | $6.6 \times 10^5$ | $2.1 \times 10^6$ | $3.2 \times 10^6$ | $7.8 \times 10^5$ | $3.8 \times 10^6$ |
| | Friction coefficient (23°C) | | 0.34 | 0.35 | 0.35 | 0.29 | 0.32 |
| | Wear depth (23°C) | μm | 10.3 | 10.8 | 10.9 | 10.0 | 10.2 |
| | Black spot blemishes | number | 0 | 0 | 0 | 0 | 0 |

[Table 9]

| Example | | 1-6 | 1-7 | 1-8 | 1-9 |
|---|---|---|---|---|---|
| | Formic acid relative viscosity | - | 152 | 182 | 182 | 181 |
| | Formic acid insoluble component | % by mass | 52.4 | 16.2 | 31.9 | 52.3 |
| | Formic acid insoluble component relative to ash content | % by mass | 105.8 | 109.0 | 107.3 | 105.6 |
| | Short GF proportion | % by mass | 44.1 | 30.1 | 43.8 | 44.8 |
| Evaluations | Tensile strength arithmetic mean $\mu_{tensile}$ | MPa | 225 | 164 | 201 | 234 |
| | Tensile strength Coefficient of variation $CV_{tensile}$ | - | 0.15 | 0.13 | 0.11 | 0.10 |
| | Unfibrillated number | number | 0 | 0 | 0 | 0 |
| | Vibration fatigue | repetitions | $4.1 \times 10^6$ | $7.9 \times 10^5$ | $5.2 \times 10^6$ | $5.6 \times 10^6$ |
| | Friction coefficient (23°C) | | 0.33 | 0.29 | 0.30 | 0.31 |
| | Wear depth (23°C) | μm | 10.8 | 9.8 | 9.7 | 10.6 |
| | Black spot blemishes | number | 0 | 0 | 0 | 0 |

[Table 10]

| Example | | 1-10 | 1-11 | 1-12 | 1-13 | 1-14 |
|---|---|---|---|---|---|---|
| | Formic acid relative viscosity | - | 185 | 185 | 183 | 185 | 184 |
| | Formic acid insoluble component | % by mass | 16.8 | 32.2 | 52.5 | 16.2 | 32.1 |
| | Formic acid insoluble component relative to ash content | % by mass | 113.0 | 108.3 | 106.0 | 109.0 | 108.0 |
| | Short GF proportion | % by mass | 25.9 | 38.7 | 41.9 | 29.9 | 42.8 |
| | Tensile strength arithmetic mean $\mu_{tensile}$ | MPa | 166 | 209 | 236 | 160 | 199 |
| | Tensile strength Coefficient of variation $CV_{tensile}$ | - | 0.08 | 0.06 | 0.05 | 0.17 | 0.16 |
| | Unfibrillated number | number | 0 | 0 | 0 | 0 | 0 |
| Evaluations | Vibration fatigue | repetitions | $8.9 \times 10^5$ | $6.1 \times 10^6$ | $7.8 \times 10^6$ | $7.8 \times 10^5$ | $4.8 \times 10^6$ |
| | Friction coefficient (23°C) | | 0.29 | 0.29 | 0.32 | 0.30 | 0.31 |
| | Wear depth (23°C) | μm | 8.5 | 8.6 | 9.0 | 10.2 | 10.1 |
| | Black spot blemishes | number | 0 | 0 | 0 | 0 | 0 |

[Table 11]

| Example | | 1-15 | 1-16 | 1-17 | 1-18 |
|---|---|---|---|---|---|
| Formic acid relative viscosity | - | 184 | 183 | 183 | 185 |
| Formic acid insoluble component | % by mass | 52.1 | 32.1 | 31.5 | 30.5 |
| Formic acid insoluble component relative to ash content | % by mass | 105.2 | 108.0 | 106.0 | 106.8 |
| Short GF proportion | % by mass | 43.3 | 37.8 | 44.1 | 42.7 |
| Tensile strength arithmetic mean $\mu_{tensile}$ | MPa | 230 | 210 | 200 | 203 |
| Tensile strength Coefficient of variation $CV_{tensile}$ | - | 0.15 | 0.04 | 0.12 | 0.10 |
| Evaluations | Unfibrillated number | number | 0 | 0 | 0 | 0 |
| | Vibration fatigue | repetitions | $5.0 \times 10^6$ | $6.2 \times 10^6$ | $5.1 \times 10^6$ | $5.5 \times 10^6$ |
| | Friction coefficient (23°C) | | 0.32 | 0.28 | 0.31 | 0.29 |
| | Wear depth (23°C) | μm | 10.6 | 8.5 | 9.8 | 9.6 |
| | Black spot blemishes | number | 0 | 0 | 0 | 0 |

[Table 12]

| Comparative Example | | 1-1 | 1-2 | 1-3 | 1-4 |
|---|---|---|---|---|---|
| Formic acid relative viscosity | - | 112 | 152 | 43 | 150 |
| Formic acid insoluble component | % by mass | 30.1 | 29.8 | 31.5 | 29.6 |
| Formic acid insoluble component relative to ash content | % by mass | 101.3 | 100.3 | 106.0 | 99.6 |
| Short GF proportion | % by mass | 56.4 | 57.5 | 41.5 | 56.9 |
| Tensile strength arithmetic mean $\mu_{tensile}$ | MPa | 179 | 180 | 180 | 180 |
| Tensile strength Coefficient of variation $CV_{tensile}$ | - | 1.10 | 1.51 | 1.06 | 1.47 |
| Evaluations Unfibrillated number | number | 5 | 6 | 0 | 0 |
| Vibration fatigue | repetitions | $2.7\times10^5$ | $3.5\times10^5$ | $1.8\times10^5$ | $4.1\times10^5$ |
| Friction coefficient (23°C) | | 0.42 | 0.41 | 0.52 | 0.41 |
| Wear depth (23°C) | μm | 12.5 | 12.1 | 18.1 | 11.8 |
| Black spot blemishes | number | 4 | 8 | 0 | 6 |

[Table 13]

| Comparative Example | | | 1-5 | 1-6 |
|---|---|---|---|---|
| Evaluations | Formic acid relative viscosity | - | 151 | 116 |
| | Formic acid insoluble component | % by mass | 29.4 | 29.5 |
| | Formic acid insoluble component relative to ash content | % by mass | 98.9 | 99.2 |
| | Short GF proportion | % by mass | 57.4 | 42.2 |
| | Tensile strength arithmetic mean $\mu_{tensile}$ | MPa | 181 | 179 |
| | Tensile strength Coefficient of variation $CV_{tensile}$ | - | 0.19 | 1.15 |
| | Unfibrillated number | number | 5 | 0 |
| | Vibration fatigue | repetitions | $3.5 \times 10^6$ | $3.4 \times 10^5$ |
| | Friction coefficient (23°C) | | 0.41 | 0.42 |
| | Wear depth (23°C) | $\mu$m | 10.2 | 12.1 |
| | Black spot blemishes | number | 6 | 5 |

With the worm wheel gears of Examples 1-19 to 1-21 which satisfied the prescribed ranges, favorable mechanical properties were imparted, variations in physical properties were able to be reduced, and good sliding properties were able to be imparted.

In contrast, in the case of the worm wheel gears of Comparative Examples 1-7 and 1-8, the molded articles were unable to be imparted with satisfactory mechanical properties, a reduction in variations in the physical properties weas not achieved, and sliding properties were not achieved.

[Sample Raw Materials]

Production of Polyamide Resins (A2)

(Production Example 2-1: Production of Polyamide Resin A2-1 (Polyamide 66))

First, 15,000 g of an equimolar salt of adipic acid and hexamethylenediamine, and a 0.5 mol% excess of adipic acid relative to the equimolar salt component were dissolved in 15,000 g of distilled water to obtain a 50% by mass aqueous solution of raw material monomers. The thus obtained aqueous solution was placed in an autoclave with an internal capacity of 40 L, and the inside of the autoclave was flushed with nitrogen. This aqueous solution was stirred under a temperature of at least 110°C but not more than 150°C while water vapor was gradually removed to concentrate the solution to a solution concentration of 70% by mass. Subsequently, the internal temperature was raised to 220°C. At this time, the pressure inside the autoclave increased to 1.8 MPa. Reaction was then conducted for one hour while water vapor was gradually removed to maintain the pressure at 1.8 MPa, until the internal temperature reached 270°C. Subsequently, the pressure was reduced down to atmospheric pressure over a period of about one hour, and after atmospheric pressure was attained, the product was discharged in strand form from a bottom nozzle, cooled in water and then cut, yielding pellets of a polyamide resin A2-1.
The thus obtained pellets were dried at 90°C under a nitrogen gas stream for 4 hours. These pellets had a viscosity value RV of 48 and a melting point of 265°C.

(Production Example 2-2: Production of Polyamide Resin A2-2 (Polyamide 66))

With the exception of reducing the pressure inside the autoclave to 100 torr ($1.33 \times 10^4$ Pa) with a vacuum device and maintaining that pressure for 5 minutes before discharging the product from the bottom nozzle, the same method as Production Example 2-1 was used to produce pellets of a polyamide resin A2-2.
These pellets had a viscosity value RV of 60 and a melting point of 264°C.

(Production Example 2-3: Production of Polyamide Resin A2-3 (Polyamide 66))

Ten kg of the above pellets obtained above in Production Example 2-1 were placed in a cone-shaped ribbon vacuum dryer (product name: RIBOCONE RM-10V, manufactured by Okawara Mfg. Co., Ltd.), and the pellets were stirred under a stream of nitrogen of 10 L/minute, thereby flushing the inside of the dryer with nitrogen. Stirring was then conducted with nitrogen passing through the dryer at 10 L/minute, while the pellets were heated at a temperature of 215°C for 6 hours. Subsequently, the nitrogen flow was continued while the temperature was lowered, and when the temperature reached about 50°C, the pellets were removed from the dryer.
These pellets had a viscosity value RV of 260 and a melting point of 262°C.

Production of Fibrous Reinforcing Materials (B2)

(Production Example 2-4: Production of Fibrous Reinforcing Material B2-1)

First, the materials (x2-1) to (x2-4) listed below were diluted with water to obtain a glass fiber sizing agent containing, in terms of the solid fraction, 2% by mass of a polyurethane resin, 4% by mass of a maleic anhydride-butadiene copolymer, 0.6% by mass of γ-aminopropyltriethoxysilane, and 0.1% by mass of a carnauba wax.
The thus obtained glass fiber sizing agent was adhered to glass fibers having a number average fiber diameter of 7 μm. The adhesion method involved winding the melt spun glass fibers onto a rotating drum while an applicator was used to apply the sizing agent to the glass fibers. Subsequently, the glass fibers with the adhered sizing agent were dried, yielding a roving of bundled glass fibers that had been surface-treated with the glass fiber sizing agent. Bundles of 1,000 glass fibers were produced. The amount of the glass fiber sizing agent adhered to the glass fibers was 0.6% by mass. The obtained glass roving was cut to a length of 3 mm, yielding a fibrous reinforcing material B2-1 (chopped strands, hereinafter also abbreviated as simply "(B2-1)").
The components (x2-1) to (x2-4) for the sizing agent used in producing the above fibrous reinforcing material were as follows.

(x2-1) a polyurethane resin emulsion, product name: VONDIC (a registered trademark) 1050, an aqueous solution with a solid fraction of 50% by mass (manufactured by DIC Corporation)
(x2-2) a maleic anhydride-based copolymer emulsion, product name: ACROBINDER (a registered trademark) BG-7, an aqueous solution with a solid fraction of 25% by mass (manufactured by Sanyo Chemical Industries, Ltd.)

(x2-3) an aminosilane-based coupling agent, product name: KBE-903, (γ-aminopropyltriethoxysilane) (manufactured by Shin-Etsu Chemical Co., Ltd.)
(x2-4) a lubricant, product name: Carnauba Wax (manufactured by S.KATO & Co., Ltd.)

(Production Example 2-5: Production of Fibrous Reinforcing Material B2-2)

With the exception of using glass fibers having a number average fiber diameter of 5 μm instead of the glass fibers having a number average fiber diameter of 7 μm, the same method as Production Example 2-4 was used to obtain a fibrous reinforcing material B2-2 (chopped strands, hereinafter also abbreviated as simply "(B2-2)"). The amount of the glass fiber sizing agent adhered to the glass fibers was 0.7% by mass.

(Production Example 2-6: Production of Fibrous Reinforcing Material B2-3)

With the exception of using glass fibers having a number average fiber diameter of 13 μm instead of the glass fibers having a number average fiber diameter of 7 μm, the same method as Production Example 2-4 was used to obtain a fibrous reinforcing material B2-3 (chopped strands, hereinafter also abbreviated as simply "(B2-3)"). The amount of the glass fiber sizing agent adhered to the glass fibers was 0.4% by mass.

[Other Raw Materials in Each Sample]

In addition to the raw materials produced in the manner described above, the following raw materials were also used.

(C2) Copper compound

Copper iodide: Copper (I) Iodide, manufactured by Wako Pure Chemical Corporation

(D2) Metal halide

Potassium iodide: Potassium Iodide, manufactured by Wako Pure Chemical Corporation

<Examples 2-1 to 2-7, Comparative Examples 2-1 and 2-2>

Using the constituent components described above, polyamide resin compositions of each sample were produced under the conditions described below.

[Example 2-1: Production of Polyamide Resin Composition PA-a1]

(1) Melt Kneading Step

Using a twin screw extruder with a screw diameter of 26 mm (product name: ZSK 26MC, manufactured by Coperion GmbH) that used screws having a melting zone and a kneading zone, a mixture prepared by adding the copper compound and the halide to the polyamide resin A2-1 obtained in Production Example 2-1 was supplied as the top feed and the fibrous reinforcing material B2-1 obtained in Production Example 2-4 was supplied as the side feed in accordance with the blend formulation shown in Table 14, melt-kneading was conducted under extrusion conditions including a temperature setting of 290°C, a screw rotational rate of 300 rpm and a discharge rate of 29 kg/hour, cooling was conducted at the water-immersed strand length shown in Table 14, and the strands were then cut with a cutter to obtain pellets. The shape of the obtained pellets was a circular cylindrical shape, and the pellet length, long diameter a, short diameter b, and ratio a/b were as shown in Table 17.

(2) Heating Step (Solid-Phase Polymerization)

Eleven kg of the pellets obtained above in the above melt-kneading step (1) were placed in a cone-shaped ribbon vacuum dryer (product name: RIBOCONE RM-10V, manufactured by Okawara Mfg. Co., Ltd.), and the pellets were stirred under a stream of nitrogen of 10 L/minute, thereby flushing the inside of the dryer with nitrogen (oxygen concentration: 3.1 ppm, moisture concentration: 8.3 ppm). Stirring was then conducted with nitrogen passing through the dryer at 10 L/minute, while the pellets were heated at a temperature of 210°C for 5 hours. Subsequently, the nitrogen flow was continued while the temperature was lowered, and when the temperature reached about 50°C, the pellets were removed from the dryer, yielding pellets of a polyamide resin composition PA-a1. These pellets had a viscosity value RV of 177.

[Example 2-2: Production of Polyamide Resin Composition PA-a2]

With the exception of shortening the water-immersed strand length, melt-kneading and solid-phase polymerization were conducted in the same manner as Example 2-1, yielding pellets of a polyamide resin composition PA-a2. The pellet length, long diameter a, short diameter b, and ratio a/b following the melt-kneading were as shown in Table 17. The viscosity value RV for the pellets obtained following the solid-phase polymerization was 184.

[Example 2-3: Production of Polyamide Resin Composition PA-a3]

With the exception of using the polyamide resin A2-2 obtained in Production Example 2-2 instead of the polyamide resin A2-1 obtained in Production Example 2-1, melt-kneading and solid-phase polymerization were conducted in the same manner as Example 2-1, yielding pellets of a polyamide resin composition PA-a3. The pellet length, long diameter a, short diameter b, and ratio a/b following the melt-kneading were as shown in Table 17. The viscosity value RV for the pellets obtained following the solid-phase polymerization was 185.

[Example 2-4: Production of Polyamide Resin Composition PA-a4]

With the exception of reducing the blend amount of the fibrous reinforcing material B2-1 to the amount shown in Table 14, melt-kneading and solid-phase polymerization were conducted in the same manner as Example 2-1, yielding pellets of a polyamide resin composition PA-a4. The pellet length, long diameter a, short diameter b, and ratio a/b following the melt-kneading were as shown in Table 17. The viscosity value RV for the pellets obtained following the solid-phase polymerization was 180.

[Example 2-5: Production of Polyamide Resin Composition PA-a5]

With the exception of increasing the blend amount of the fibrous reinforcing material B2-1 to the amount shown in Table 15, melt-kneading and solid-phase polymerization were conducted in the same manner as Example 2-1, yielding pellets of a polyamide resin composition PA-a5. The pellet length, long diameter a, short diameter b, and ratio a/b following the melt-kneading were as shown in Table 18. The viscosity value RV for the pellets obtained following the solid-phase polymerization was 176.

[Example 2-6: Production of Polyamide Resin Composition PA-a6]

With the exception of using the fibrous reinforcing material B2-2 instead of the fibrous reinforcing material B2-1, melt-kneading and solid-phase polymerization were conducted in the same manner as Example 2-1, yielding pellets of a polyamide resin composition PA-a6. The pellet length, long diameter a, short diameter b, and ratio a/b following the melt-kneading were as shown in Table 18. The viscosity value RV for the pellets obtained following the solid-phase polymerization was 178.

[Example 2-7: Production of Polyamide Resin Composition PA-a7]

With the exception of using the fibrous reinforcing material B2-3 instead of the fibrous reinforcing material B2-1, melt-kneading and solid-phase polymerization were conducted in the same manner as Example 2-1, yielding pellets of a polyamide resin composition PA-a7. The pellet length, long diameter a, short diameter b, and ratio a/b following the melt-kneading were as shown in Table 18. The viscosity value RV for the pellets obtained following the solid-phase polymerization was 177.

[Comparative Example 2-1: Production of Polyamide Resin Composition PA-b1]

With the exception of lengthening the water-immersed strand length, melt-kneading and solid-phase polymerization were conducted in the same manner as Example 2-1, yielding pellets of a polyamide resin composition PA-b1. The pellet length, long diameter a, short diameter b, and ratio a/b following the melt-kneading were as shown in Table 19. The viscosity value RV for the pellets obtained following the solid-phase polymerization was 170.

[Comparative Example 2-2: Production of Polyamide Resin Composition PA-b2]

Using the polyamide resin A2-3 obtained in Production Example 2-3 instead of the polyamide resin A2-1 obtained in Production Example 2-1, a mixture prepared by adding the copper compound and the halide to the polyamide resin A2-3 was supplied as the top feed and the fibrous reinforcing material B2-1 obtained in Production Example 2-4 was supplied as the side feed in accordance with the blend formulation shown in Table 16, melt-kneading was conducted under extrusion conditions including a temperature setting of 310°C, a screw rotational rate of 200 rpm and a discharge rate of 15 kg/hour, cooling was conducted at the water-immersed strand length shown in Table 16, and the strands were then cut with a cutter to obtain pellets of a polyamide resin composition PA-b2. The obtained pellets had a circular cylindrical shape, and the pellet length, long diameter a, short diameter b, and ratio a/b were as shown in Table 19. The viscosity value RV for the obtained pellets obtained was 180.

<Evaluations>

Each of the sample polyamide resin compositions obtained using the methods described above was subjected to the following evaluations. The evaluation results are shown in Tables 17 to 19.

(1) Pellet Shape

One hundred pellets of the polyamide resin compositions obtained in each of the examples and comparative examples were measured for long diameter a and short diameter b of the pellet cross-section and pellet length using a set of electronic calipers, and the average value of each set of measurements was recorded as the long diameter a, the short diameter b and the pellet length respectively. Further, the ratio a/b between the long diameter a and the short diameter b of the pellet cross-section was also calculated.

(2) Viscosity value RV

The relative viscosity RV of each polyamide resin composition from the examples and comparative examples was measured in accordance with ASTM D789. More specifically, the RV value was measured at 25°C using a solution prepared by dissolving the polyamide in 90% by mass formic acid (containing 10% by mass of water) in a concentration of 8.4% by mass.

(3) Molecular Weight

The component fraction (%) of components having a molecular weight of 10,000 or less and the component fraction (%) of components having a molecular weight of 250,000 or more within each polyamide resin composition from the examples and comparative examples were calculated from a molecular weight distribution measured by gel permeation chromatography (GPC) under the following conditions.

Apparatus: HLC-8320GPC manufactured by Tosoh Corporation
Detector: differential refractometer (RI)
Solvent: hexafluoroisopropanol (HFIP) containing 0.1 mol% of dissolved sodium trifluoroacetate
Columns: two TSKgel-GMHHR-M columns and one G1000HHR column, each manufactured by Tosoh Corporation, connected in series were used, and the polymethyl methacrylate (PMMA) equivalent molecular weight was calculated based on the resulting elution curve.

(4) Molar Ratio between Quantity of Carboxyl Terminal Groups and Quantity of Amino Terminal Groups

For each polyamide resin composition obtained in the examples and comparative examples, the quantity of carboxyl terminal groups [COOH] and the quantity of amino terminal groups [NH$_2$] were each calculated as the amount of terminal groups per 1 kg of the polyamide resin using $^1$H-NMR (sulfuric acid-d2 solvent). The specific procedure was as follows.
Carboxyl group terminals: the integral value for the hydrogens of the methylene group (-CH$_2$-) adjacent to each terminal COOH group was calculated from the peak (a') at 2.724 ppm.
Amino group terminals: the integral value for the hydrogens of the methylene group (-CH$_2$-) adjacent to each terminal NH$_2$ group was calculated from the peak (b') at 2.884 ppm.
Dicarboxylic acid units within the polyamide main chain: the integral value for the hydrogens of the methylene group (-CH$_2$-) adjacent to the amide group was calculated from the peak (a) at 2.451 ppm.

Diamine units within the polyamide main chain: the integral value for the hydrogens of the methylene group (-CH$_2$-) adjacent to the amide group was calculated from the peak (b) at 3.254 ppm.

Using the integral values for the peaks described above, the following formula was used to calculate the quantity of carboxyl terminal groups [COOH] and the quantity of amino terminal groups [NH$_2$].

$$\text{Quantity of carboxyl terminal groups [COOH] (mmolEq/kg)}$$

$$= (a'/2) / [\{(b+b')\times 114.2/4\}+\{(a+a')\times 112.1/4\}]$$

$$\text{Quantity of amino terminal groups [NH}_2\text{] (mmolEq/kg)}$$

$$= (b'/2) / [\{(b+b')\times 114.2/4\}+\{(a+a')\times 112.1/4\}]$$

Based on the obtained quantity of carboxyl terminal groups [COOH] and quantity of amino terminal groups [NH$_2$], the molar ratio [NH$_2$]/[COOH] between the quantity of amino terminal groups and the quantity of carboxyl terminal groups was calculated.

[Table 14]

| Example | | | | 2-1 | 2-2 | 2-3 | 2-4 |
|---|---|---|---|---|---|---|---|
| Polyamide resin composition | | | | PA-a1 | PA-a2 | PA-a3 | PA-a4 |
| Composition | Polyamide resin (A2) | | Type | A2-1 | A2-1 | A2-2 | A2-1 |
| | | | parts by mass | 100 | 100 | 100 | 100 |
| | | | Quantity of amino terminal groups [NH$_2$] (mmolEq/kg) | 46 | 46 | 38 | 46 |
| | | | Quantity of carboxyl terminal groups | 85 | 85 | 72 | 85 |

| | | [COOH] (mmolEq/kg) | | | | |
|---|---|---|---|---|---|---|
| | | [NH2]/[COOH] | 0.54 | 0.54 | 0.53 | 0.54 |
| | | Melting point Tm (°C) | 265 | 265 | 264 | 265 |
| | | Viscosity value RV | 48 | 48 | 60 | 48 |
| | Fibrous reinforcing material (B2) | Type | B2-1 | B2-1 | B2-1 | B2-1 |
| | | parts by mass | 34 | 34 | 34 | 11 |
| | | Fiber diameter (μm) | 7 | 7 | 7 | 7 |
| | Copper compound (C2) | parts by mass | 0.03 | 0.03 | 0.03 | 0.03 |
| | Metal halide (D2) | parts by mass | 0.13 | 0.13 | 0.13 | 0.13 |
| Extrusion conditions | | Water-immersed strand length (cm) | 30 | 12 | 30 | 30 |

[Table 15]

| Example | | | 2-5 | 2-6 | 2-7 |
|---|---|---|---|---|---|
| Polyamide resin composition | | | PA-a5 | PA-a6 | PA-a7 |
| Composition | Polyamide resin (A2) | Type | A2-1 | A2-1 | A2-1 |
| | | parts by mass | 100 | 100 | 100 |
| | | Quantity of amino terminal groups [NH$_2$] (mmolEq/kg) | 46 | 46 | 46 |
| | | Quantity of carboxyl terminal groups [COOH] (mmolEq/kg) | 85 | 85 | 85 |
| | | [NH$_2$]/[COOH] | 0.54 | 0.54 | 0.54 |
| | | Melting point Tm (°C) | 265 | 265 | 265 |
| | | Viscosity value RV | 48 | 48 | 48 |
| | Fibrous reinforcing material (B2) | Type | B2-1 | B2-2 | B2-3 |
| | | parts by mass | 100 | 34 | 34 |
| | | Fiber diameter (μm) | 7 | 5 | 13 |
| | Copper compound (C2) | parts by mass | 0.03 | 0.03 | 0.03 |
| | Metal halide (D2) | parts by mass | 0.13 | 0.13 | 0.13 |

| Extrusion conditions | Water-immersed strand length (cm) | 15 | 30 | 30 |
|---|---|---|---|---|

[Table 16]

| Comparative Example | | | 2-1 | 2-2 |
|---|---|---|---|---|
| Polyamide resin composition | | | PA-b1 | PA-b2 |
| Composition | Polyamide resin (A2) | Type | A2-1 | A2-3 |
| | | parts by mass | 100 | 100 |
| | | Quantity of amino terminal groups [NH₂] (mmolEq/kg) | 46 | 9 |
| | | Quantity of carboxyl terminal groups [COOH] (mmolEq/kg) | 85 | 62 |
| | | [NH₂]/[COOH] | 0.54 | 0.15 |
| | | Melting point Tm (°C) | 265 | 262 |
| | | Viscosity value RV | 48 | 260 |
| | Fibrous reinforcing material (B2) | Type | B2-1 | B2-1 |
| | | parts by mass | 34 | 34 |
| | | Fiber diameter (μm) | 7 | 10 |
| | Copper compound (C2) | parts by mass | 0.03 | 0.03 |
| | Metal halide (D2) | parts by mass | 0.13 | 0.13 |

| Extrusion conditions | Water-immersed strand length (cm) | 80 | 30 |
|---|---|---|---|

[Table 17]

| Example | | | 2-1 | 2-2 | 2-3 | 2-4 |
|---|---|---|---|---|---|---|
| Pellet shape | Length | (mm) | 3.03 | 3.05 | 3.01 | 3.01 |
| | Long diameter a | (mm) | 3.02 | 4.05 | 2.92 | 3.52 |
| | Short diameter b | (mm) | 2.01 | 1.42 | 2.05 | 1.65 |
| | Ratio a/b | - | 1.50 | 2.85 | 1.42 | 2.13 |
| Solid-phase polymerizatio n conditions | Heating temperature (°C) | | 210 | 210 | 210 | 210 |
| | Heating time (hours) | | 5 | 5 | 5 | 5 |
| Resin characteristics | Viscosity value RV of thermoplastic resin composition | | 177 | 184 | 185 | 180 |
| | Fraction (X) of polyamide resin with molecular weight of 10,000 or less (%) | | 3.36 | 2.92 | 3.26 | 2.99 |
| | Fraction (Y) of polyamide resin with molecular weight of 250,000 or more (%) | | 6.18 | 6.85 | 6.90 | 6.79 |
| | Ratio (Y)/(X) | | 1.84 | 2.35 | 2.12 | 2.27 |

[Table 18]

| Example | | | 2-5 | 2-6 | 2-7 |
|---|---|---|---|---|---|
| Pellet shape | Length | (mm) | 3.03 | 3.03 | 3.02 |
| | Long diameter a | (mm) | 2.81 | 3.12 | 2.93 |
| | Short diameter b | (mm) | 2.1 | 1.87 | 2.02 |
| | Ratio a/b | - | 1.34 | 1.67 | 1.45 |
| Solid-phase polymerizatio n conditions | Heating temperature (°C) | | 210 | 210 | 210 |
| | Heating time (hours) | | 5 | 5 | 5 |
| Resin characteristics | Viscosity value RV of thermoplastic resin composition | | 176 | 178 | 177 |
| | Fraction (X) of polyamide resin with molecular weight of 10,000 or less (%) | | 3.52 | 3.38 | 3.39 |
| | Fraction (Y) of polyamide resin with molecular weight of 250,000 or more (%) | | 6.14 | 6.20 | 6.29 |
| | Ratio (Y)/(X) | | 1.74 | 1.83 | 1.86 |

[Table 19]

| Comparative Example | | | | 2-1 | 2-2 |
|---|---|---|---|---|---|
| Pellet shape | Length | (mm) | | 3.03 | 3.02 |
| | Long diameter a | (mm) | | 2.45 | 2.89 |
| | Short diameter b | (mm) | | 2.43 | 2.06 |
| | Ratio a/b | - | | 1.01 | 1.40 |
| Solid-phase polymerizatio n conditions | Heating temperature (°C) | | 210 | | - |
| | Heating time (hours) | | 5 | | - |
| Resin characteristics | Viscosity value RV of thermoplastic resin composition | | 170 | | 160 |
| | Fraction (X) of polyamide resin with molecular weight of 10,000 or less (%) | | 3.54 | | 3.31 |
| | Fraction (Y) of polyamide resin with molecular weight of 250,000 or more (%) | | 5.85 | | 4.56 |
| | Ratio (Y)/(X) | | 1.65 | | 1.38 |

Based on the results in Tables 17 to 19, it was evident that in the case of the polyamide resin compositions PA-a1 to PA-a7 (Examples 2-1 to 2-7), despite the fact that the time of the heating step (solid-phase polymerization) was constant, the high molecular weight component increased, and the value of the viscosity value RV also increased. It was evident that by conducting the heating step (solid-phase polymerization) using elliptical cylinder-shaped pellets, the molecular weight distribution could be shifted efficiently toward the high molecular weight side, meaning the time of the heating step (solid-phase polymerization) could be shortened.

<Physical Property Measurement Methods>

[Physical Property 3-1]

(Viscosity value VN)

Using each polyamide and melt-kneaded product, and the pellets of the thermoplastic resin composition, the viscosity value VN was measured in accordance with ISO 307 (JIS-K6933). Specifically, measurements were conducted at 25°C in 96% by mass sulfuric acid using solutions in which the concentration of the polyamide, the melt-kneaded product or the thermoplastic resin composition was 0.5% by mass. When the sample contained a reinforcing material such as glass fibers, the ash content in the sample was measured in advance, for example, based on the prescription of ISO 3451-4, and the amount of the polyamide resin in the sample was then calculated by subtracting the ash content.

[Physical Property 3-2]

(Moisture Content)

The pellets of the melt-kneaded product produced in each of the examples and comparative examples were measured for moisture content (% by mass) within the pellets using a Karl Fischer moisture meter (a coulometric titration trace moisture measurement apparatus, model CA-200, manufactured by Mitsubishi Chemical Analytech, Co., Ltd.) in accordance with the method prescribed in ISO 15512.

[Physical Property 3-3]

(Melting Point)

The heat of fusion was measured in accordance with JIS-K7121 using a Diamond DSC apparatus manufactured by PerkinElmer, Inc. (hereinafter also referred to as a "DSC measurement"). DSC measurements were conducted under a nitrogen atmosphere. About 10 mg samples of the pellets of polyamide 66 produced in Production Examples 3-1 and 3-2 were used as measurement samples. Specifically, in the above DSC measurement, the sample was first heated from 25°C to a temperature of about the melting point of the polyamide +30°C (for example, 294°C in the case of PA66) at a rate of temperature increase of 20°C/minute. Next, the maximum temperature reached during this first temperature raising was held for 3 minutes to ensure the polyamide reached a completely melted state. Subsequently, the sample was cooled to 25°C at a rate of temperature reduction of 20°C/minute, and then held at 25°C for 3 minutes. The sample was then once again heated in a similar manner at a rate of temperature increase of 20°C/minute, and the endothermic peak (melting peak) that formed was used to determine the melting point of the polyamide 66.

[Physical Property 3-4]

(Weight Average Fiber Length of Glass Fibers)

Using the method described below, the weight average fiber length of the glass fibers contained in the polyamide resin composition following the heating step was calculated. One gram of the polyamide resin composition following the heating step was placed in a porcelain crucible, and an electric muffle furnace (FP-31 manufactured by Yamato Scientific Co., Ltd., temperature setting: 600°C) was used to incinerate and remove the resin composition. The glass fibers remaining after the incineration were transferred onto a glass slide and inspected under an optical microscope, an image analyzer was used to measure the length of 400 randomly selected glass fibers, and the total of the measured lengths divided by the total mass of those glass fibers was calculated as the weight average fiber length.

<Evaluation Methods>

[Production of Test Pieces]

Using the pellets of each of the thermoplastic resin compositions produced in the examples and comparative examples, an injection molding apparatus was used to produce small tensile test pieces (type CP13) (thickness: 3 mm) in accordance with JIS-K7139. Using a PS40E apparatus manufactured by Nissei Plastic Industrial Co., Ltd. as the injection molding apparatus, a mold for molding two of the small tensile test pieces was fitted to the apparatus. The cylinder temperature was set to the polyamide melting point + about 15°C (for example, 280°C in the case of PA66), and the mold temperature was set to 80°C. Injection molding was conducted under conditions including an injection time of 10 seconds, a cooling time of 7 seconds, a plasticization amount of 30 mm (with a cushion amount of about 10 mm), yielding dumbbell-shaped small tensile test pieces from the pellets of the thermoplastic resin composition.

[Evaluation 3-1]

(Color Tone of Pellets and Molded Articles)

Using a color difference meter ZE2000 manufactured by Nippon Denshoku Industries, Co., Ltd., the L value, a value and b value were measured by reflection measurements, and the degree of yellowing was determined from the b value. A negative b value with a large absolute value indicates a color tone that is white and favorable, whereas a positive value with a large absolute value indicates a yellow coloration has occurred.

[Evaluation 3-2]

(Vibration Fatigue Resistance)

Using the obtained small tensile test piece (type CP13) (thickness: 3 mm), a hydraulic servo fatigue tester (product name: EHF-50-10-3, manufactured by Saginomiya Seisakusho, Inc.) was used in accordance with the prescription of JIS K7118 to determine the number of vibration repetitions (number) before the test piece ruptured under test conditions including a temperature of 120°C, a sinusoidal waveform with a frequency of 20 Hz, and a tensile load of 60 MPa.

In terms of evaluation criteria, a large number of vibration repetitions before the test piece ruptured (specifically, vibration repetitions of $15 \times 10^5$ repetitions or greater) was evaluated as representing excellent vibration fatigue resistance.

[Productivity Evaluation: Evaluation of Abnormal Noises during Solid-Phase Polymerization]

The occurrence of squeaking or abnormal noise generation during operation of the solid-phase polymerization was ascertained and by 10 panelists, and an evaluation was conducted in the following manner.

No panelists detected squeaking or abnormal noise generation: o (good)

One or two panelists detected squeaking or abnormal noise generation: Δ (poor)

Three or more panelists detected squeaking or abnormal noise generation: × (very poor)

<Raw Materials>

1. Component (A3): Production of Polyamides

[Production Example 3-1]

(Production of Polyamide A3-1: Polyamide 66)

First, 15,000 g of an equimolar salt of adipic acid and hexamethylenediamine, and a 0.5 mol% excess of adipic acid relative to the equimolar salt component were dissolved in 15,000 g of distilled water to obtain a 50% by mass aqueous solution of raw material monomers. The thus obtained aqueous solution was placed in an autoclave with an internal capacity of 40 L, and the inside of the autoclave was flushed with nitrogen. This aqueous solution was stirred under a temperature of at least 110°C but not more than 150°C while water vapor was gradually removed to concentrate the solution to a solution concentration of 70% by mass. Subsequently, the internal temperature was raised to 220°C. At this time, the pressure inside the autoclave increased to 1.8 MPa. Reaction was then conducted for 1 hour while water vapor was gradually removed to maintain the pressure at 1.8 MPa, until the internal temperature reached 270°C. Subsequently, the pressure was reduced down to atmospheric pressure over a period of about one hour, and after atmospheric pressure was attained, the product was discharged in strand form from a bottom nozzle, cooled in water and then cut, yielding pellets of a polyamide A3-1. The thus obtained pellets were dried at 90°C under a nitrogen gas stream for 4 hours. These pellets had a viscosity value VN of 133 and a melting point of 265°C.

[Production Example 3-2]

(Production of Polyamide A3-2: Polyamide 66)

With the exception of reducing the pressure inside the autoclave to 100 torr ($1.33 \times 10^4$ Pa) with a vacuum device and maintaining that pressure for 10 minutes before discharging the product from the bottom nozzle, the same method as Production Example 3-1 was used to produce pellets of a polyamide resin A3-2. These pellets had a viscosity value VN of 182 and a melting point of 264°C.

2. Component (B3): Production of Glass Fibers

[Production Example 3-3]

(Production of Glass Fibers B3-1)

First, the materials (x3-1) to (x3-4) listed below were diluted with water to obtain a glass fiber sizing agent containing, in terms of the solid fraction, 2% by mass of a polyurethane resin, 4% by mass of a maleic anhydride-butadiene copolymer, 0.6% by mass of γ-aminopropyltriethoxysilane, and 0.1% by mass of a carnauba wax.

The thus obtained glass fiber sizing agent was adhered to glass fibers (containing boron oxide) having a number average fiber diameter of 7 μm. The adhesion method involved winding the melt spun glass fibers onto a rotating drum while an applicator was used to apply the sizing agent to the glass fibers. Subsequently, the glass fibers with the adhered sizing agent were dried, yielding a roving of bundled glass fibers that had been surface-treated with the glass fiber sizing agent. Bundles of 1,000 glass fibers were produced. The amount of the glass fiber sizing agent adhered to the glass fibers was 0.6% by mass. The obtained glass roving was cut to a length of 3 mm, yielding glass fibers B3-1 (chopped strands, hereinafter also abbreviated as simply "(B3-1)").

The components (x3-1) to (x3-4) for the sizing agent used in producing the above fibrous reinforcing material were as follows.

(x3-1) a polyurethane resin emulsion, product name: VONDIC (a registered trademark) 1050, an aqueous solution with a solid fraction of 50% by mass (manufactured by DIC Corporation)

(x3-2) a maleic anhydride-based copolymer emulsion, product name: ACROBINDER (a registered trademark) BG-7, an aqueous solution with a solid fraction of 25% by mass (manufactured by Sanyo Chemical Industries, Ltd.)

(x3-3) an aminosilane-based coupling agent, product name: KBE-903, (γ-aminopropyltriethoxysilane) (manufactured by Shin-Etsu Chemical Co., Ltd.)
(x3-4) a lubricant, product name: Carnauba Wax (manufactured by S.KATO & Co., Ltd.)

[Production Example 3-4]

(Production of Glass Fibers B3-2)

With the exception of using glass fibers (containing boron oxide) having a number average fiber diameter of 5 μm instead of the glass fibers (containing boron oxide) having a number average fiber diameter of 7 μm, the same method as Production Example 3-3 was used to obtain glass fibers B3-2 (chopped strands, hereinafter also abbreviated as simply "(B3-2)"). The amount of the glass fiber sizing agent adhered to the glass fibers was 0.7% by mass.

[Production Example 3-5]

(Production of Glass Fibers B3-3)

With the exception of using glass fibers (boron oxide free) having a number average fiber diameter of 7 μm instead of the glass fibers (containing boron oxide) having a number average fiber diameter of 7 μm, the same method as Production Example 3-3 was used to obtain glass fibers B3-3 (chopped strands, hereinafter also abbreviated as simply "(B3-3)"). The amount of the glass fiber sizing agent adhered to the glass fibers was 0.6% by mass.

[Production Example 3-6]

(Production of Glass Fibers B3-4)

With the exception of using glass fibers (containing boron oxide) having a number average fiber diameter of 10 μm instead of the glass fibers (containing boron oxide) having a number average fiber diameter of 7 μm, the same method as Production Example 3-3 was used to obtain glass fibers B3-4 (chopped strands, hereinafter also abbreviated as simply "(B3-4)"). The amount of the glass fiber sizing agent adhered to the glass fibers was 0.5% by mass.

3. Other Raw Materials

In addition to the raw materials produced in the manner described above, the following raw materials were also used.

Component (C3): Copper compound

Copper iodide: Copper (I) Iodide, manufactured by Wako Pure Chemical Corporation

Component (D3): Metal halide

Potassium iodide: Potassium Iodide, manufactured by Wako Pure Chemical Corporation

<Production of Thermoplastic Resin Compositions>

[Example 3-1]

(Production of Thermoplastic Resin Composition PA-a8)

(1) Melt Kneading Step

Using a twin screw extruder with a screw diameter of 26 mm (product name: ZSK 26MC, manufactured by Coperion GmbH), a mixture prepared by adding the copper compound and the metal halide to the polyamide A3-1 obtained in Production Example 3-1 was supplied as the top feed and the glass fibers B3-1 obtained in Production Example 3-3 were supplied as the side feed in accordance with the blend formulation shown in Table 20, melt-kneading was conducted under extrusion conditions including a temperature setting of 290°C, a screw rotational rate of 300 rpm and a discharge rate of 25 kg/hour, and a strand cutting method was used to obtain pellets of the melt-kneaded product. The VN value and moisture content of the obtained melt-kneaded product pellets were as shown in Table 25.

(2) Heating Step (Solid-Phase Polymerization)

Ten kg of the pellets obtained above in the melt-kneading step (1) and then 50 g of water under stirring were placed in a cone-shaped ribbon vacuum dryer (product name: RIBOCONE RM-10V, manufactured by Okawara Mfg. Co., Ltd.), and the inside of the dryer was flushed thoroughly with nitrogen (oxygen concentration: 4.2 ppm). Stirring was then conducted with nitrogen passing through the dryer at 2 L/minute, while the pellets were heated at a temperature of 190°C for 6 hours. Subsequently, the nitrogen flow was continued while the temperature was lowered, and when the temperature reached about 50°C, the pellets were removed from the dryer, yielding pellets of a thermoplastic resin composition PA-a8. The VN value of the thus obtained pellets was as shown in Table 25.

[Example 3-2]

(Production of Thermoplastic Resin Composition PA-a9)

With the exceptions of using the pellets (the melt-kneaded product) obtained in the melt-kneading step (1) of Example 3-1, adding 10 g of water, and heating the pellets at a temperature of 190°C for 6 hours, a solid-phase polymerization was conducted in the same manner as Example 3-1, yielding pellets of a thermoplastic resin composition PA-a9. The VN value of the obtained pellets was as shown in Table 25.

[Example 3-3]

(Production of Thermoplastic Resin Composition PA-a10)

With the exceptions of using the pellets (the melt-kneaded product) obtained in the melt-kneading step (1) of Example 3-1, adding 80 g of water, and heating the pellets at a temperature of 190°C for 6 hours, a solid-phase polymerization was conducted in the same manner as Example 3-1, yielding pellets of a thermoplastic resin composition PA-a10. The VN value of the obtained pellets was as shown in Table 25.

[Example 3-4]

(Production of Thermoplastic Resin Composition PA-a11)

The pellets (the melt-kneaded product) obtained in the melt-kneading step (1) of Example 3-1 were left to stand in an atmosphere at 23°C and a humidity of 60% for 5 days to absorb moisture. The moisture content following this water absorption was 0.5 wt%. With the exception of using these water-absorbed pellets, and heating the pellets at a temperature of 190°C for 6 hours, a solid-phase polymerization was conducted in the same manner as Example 3-1, yielding pellets of a thermoplastic resin composition PA-a11. The VN value of the obtained pellets was as shown in Table 25.

[Example 3-5]

(Production of Thermoplastic Resin Composition PA-a12)

With the exceptions of using the pellets (the melt-kneaded product) obtained in the melt-kneading step (1) of Example 3-1, adding 50 g of water, and heating the pellets at a temperature of 210°C for 9 hours, a solid-phase polymerization was conducted in the same manner as Example 3-1, yielding pellets of a thermoplastic resin composition PA-a12. The VN value of the obtained pellets was as shown in Table 26.

[Examples 3-6 to 3-9]

(Production of Thermoplastic Resin Compositions PA-a13 to PA-a16)

With the exception of altering the blend formulation in the melt-kneading step (1) of Example 3-1 as shown in Tables 21 and 22, melt-kneading was conducted in the same manner as Example 3-1. The VN value and the moisture content of each of the obtained pellets were as shown in Tables 26 and 27. Subsequently, a solid-phase polymerization was conducted in the same manner as Example 3-1, yielding pellets of thermoplastic resin compositions PA-a13 to PA-a16. The VN values of the obtained pellets were as shown in Tables 26 and 27.

In the thermoplastic resin composition of Example 3-9, the mass percentage of boron oxide relative to 100% by mass of the thermoplastic resin composition was 0% by mass.

[Example 3-10]

(Production of Thermoplastic Resin Composition PA-a17)

With the exception of altering the blend formulation in the melt-kneading step (1) of Example 3-1 as shown in Table 22, melt-kneading was conducted in the same manner as Example 3-1. The VN value and the moisture content of the obtained pellets were as shown in Table 27. Subsequently, with the exception of heating the pellets at 190°C for 3 hours, a solid-phase polymerization was conducted in the same manner as Example 3-1, yielding pellets of a thermoplastic resin composition PA-a17. The VN value of the obtained pellets was as shown in Table 27.

[Comparative Example 3-1]

(Production of Thermoplastic Resin Composition PA-b3)

With the exceptions of using the pellets (the melt-kneaded product) obtained in the melt-kneading step (1) of Example 3-1, adding no water, and heating the pellets at a temperature of 190°C for 6 hours, a solid-phase polymerization was conducted in the same manner as Example 3-1, yielding pellets of a thermoplastic resin composition PA-b3. The VN value of the obtained pellets was as shown in Table 28.

[Comparative Example 3-2]

(Production of Thermoplastic Resin Composition PA-b4)

With the exceptions of using the pellets (the melt-kneaded product) obtained in the melt-kneading step (1) of Example 3-1, adding 1 g of water, and heating the pellets at a temperature of 190°C for 6 hours, a solid-phase polymerization was conducted in the same manner as Example 3-1, yielding pellets of a thermoplastic resin composition PA-b4. The VN value of the obtained pellets was as shown in Table 28.

[Comparative Examples 3-3 and 3-4]

(Production of Thermoplastic Resin Compositions PA-b5 and PA-b6)

With the exception of altering the blend formulation in the melt-kneading step (1) of Example 3-1 as shown in Table 23, melt-kneading was conducted in the same manner as Example 3-1. The VN value and the moisture content of each of the obtained pellets were as shown in Table 28. Subsequently, a solid-phase polymerization was conducted in the same manner as Example 3-1, yielding pellets of thermoplastic resin compositions PA-b5 and PA-b6. The VN values of the obtained pellets were as shown in Table 28.

[Comparative Example 3-5]

(Production of Thermoplastic Resin Composition PA-b7)

With the exception of altering the blend formulation in the melt-kneading step (1) of Example 3-1 as shown in Table 24, melt-kneading was conducted in the same manner as Example 3-1, but the cuttability in the strand cutting method was poor, and pellets could not be obtained. Accordingly, the subsequent heating step (solid-phase polymerization) was not performed.

[Comparative Example 3-6]

(Production of Thermoplastic Resin Composition PA-b8)

With the exception of altering the blend formulation in the melt-kneading step (1) of Example 3-1 as shown in Table 24, melt-kneading was conducted in the same manner as Example 3-1. The VN value and the moisture content of the obtained pellets were as shown in Table 29. Subsequently, with the exception of heating the pellets at temperature of 190°C for 6 hours without adding any water, a solid-phase polymerization was conducted in the same manner as Example 3-1, yielding pellets of a thermoplastic resin composition PA-b8. The VN value of the obtained pellets was as shown in Table 29.

[Comparative Example 3-7]

(Production of Thermoplastic Resin Composition PA-b9)

With the exception of altering the blend formulation in the melt-kneading step (1) of Example 3-1 as shown in Table 24, melt-kneading was conducted in the same manner as Example 3-1. The VN value and the moisture content of the obtained pellets were as shown in Table 29. Subsequently, a solid-phase polymerization was conducted in the same manner as Example 3-1, yielding pellets of a thermoplastic resin composition PA-b9. The VN value of the obtained pellets was as shown in Table 29.

[Table 20]

| Example | | | 3-1 | 3-2 | 3-3 | 3-4 |
|---|---|---|---|---|---|---|
| Thermoplastic resin composition | | type | PA-a8 | PA-a9 | PA-a10 | PA-a11 |
| Composition | Polyamide (A3) | type | A3-1 | A3-1 | A3-1 | A3-1 |
| | | parts by mass | 100 | 100 | 100 | 100 |
| | Glass fibers (B3) | type | B3-1 | B3-1 | B3-1 | B3-1 |
| | | parts by mass | 34 | 34 | 34 | 34 |
| | Copper compound (C3) | parts by mass | 0.03 | 0.03 | 0.03 | 0.03 |
| | Metal halide (D3) | parts by mass | 0.13 | 0.13 | 0.13 | 0.13 |

[Table 21]

| Example | | | 3-5 | 3-6 | 3-7 | 3-8 |
|---|---|---|---|---|---|---|
| Thermoplastic resin composition | | type | PA-a12 | PA-a13 | PA-a14 | PA-a15 |
| Composition | Polyamide (A3) | type | A3-1 | A3-1 | A3-1 | A3-1 |
| | | parts by mass | 100 | 100 | 100 | 100 |
| | Glass fibers (B3) | type | B3-1 | B3-1 | B3-1 | B3-2 |
| | | parts by mass | 34 | 17 | 100 | 34 |
| | Copper compound (C3) | parts by mass | 0.03 | 0.03 | 0.03 | 0.03 |
| | Metal halide (D3) | parts by mass | 0.13 | 0.13 | 0.13 | 0.13 |

[Table 22]

| Example | | | 3-9 | 3-10 |
|---|---|---|---|---|
| Thermoplastic resin composition | | type | PA-a16 | PA-a17 |
| Composition | Polyamide (A3) | type | A3-1 | A3-2 |
| | | parts by mass | 100 | 100 |

|  |  | type | B3-1 | B3-1 |
|---|---|---|---|---|
| Glass fibers (B3) | parts by mass | 34 | 34 |
| Copper compound (C3) | parts by mass | 0.03 | 0.03 |
| Metal halide (D3) | parts by mass | 0.13 | 0.13 |

[Table 23]

| Comparative Example |  |  | 3-1 | 3-2 | 3-3 | 3-4 |
|---|---|---|---|---|---|---|
| Thermoplastic resin composition |  | type | PA-b3 | PA-b4 | PA-b5 | PA-b6 |
| Composition | Polyamide (A3) | type | A3-1 | A3-1 | A3-1 | A3-1 |
|  |  | parts by mass | 100 | 100 | 100 | 100 |
|  | Glass fibers (B3) | type | B3-1 | B3-1 | B3-4 | B3-1 |
|  |  | parts by mass | 34 | 34 | 34 | 4 |
|  | Copper compound (C3) | parts by mass | 0.03 | 0.03 | 0.03 | 0.03 |
|  | Metal halide (D3) | parts by mass | 0.13 | 0.13 | 0.13 | 0.13 |

[Table 24]

| Comparative Example | | | 3-5 | 3-6 | 3-7 |
|---|---|---|---|---|---|
| Thermoplastic resin composition | type | | PA-b7 | PA-b8 | PA-b9 |
| Composition | Polyamide (A3) | type | A3-1 | A3-1 | A3-1 |
| | | parts by mass | 100 | 100 | 100 |
| | Glass fibers (B3) | type | B3-1 | - | - |
| | | parts by mass | 150 | - | - |
| | Copper compound (C3) | parts by mass | 0.03 | 0.03 | 0.03 |
| | Metal halide (D3) | parts by mass | 0.13 | 0.13 | 0.13 |

[Table 25]

| Example | | | 3-1 | 3-2 | 3-3 | 3-4 |
|---|---|---|---|---|---|---|
| Physical properties of melt-kneaded product | Viscosity value VN | - | 133 | 133 | 133 | 133 |
| | Moisture content | ppm by mass | 709 | 709 | 709 | 709 |
| Water absorption treatment | Melt-kneaded product water absorption | - | no | no | no | yes |
| | Moisture content after water absorption | % by mass melt-kneaded product | - | - | - | 0.5 |
| Heating step conditions | Amount of water added | % by mass melt-kneaded product | 0.5 | 0.1 | 0.8 | 0 |
| | Heating temperature (pellet temperature) | °C | 190 | 190 | 190 | 190 |
| | Heating time (hours) | hours | 6 | 6 | 6 | 6 |

(continued)

| Example | | | 3-1 | 3-2 | 3-3 | 3-4 |
|---|---|---|---|---|---|---|
| Physical properties after heating step | Viscosity value VN | - | 228 | 232 | 223 | 227 |
| | Weight average fiber length of glass fibers | μm | 398 | 397 | 398 | 397 |
| Evaluations | Pellet color tone (b value) | - | 8.56 | 9.21 | 7.88 | 8.43 |
| | molded article color tone (b value) | - | 4.22 | 4.98 | 3.98 | 4.19 |
| | Vibration fatigue resistance | $\times 10^5$ repetitions | 75.2 | 71.3 | 62.8 | 79.7 |
| | Abnormal noise during solid-phase polymerization | - | o | o | o | o |

[Table 26]

| Example | | | 3-5 | 3-6 | 3-7 | 3-8 |
|---|---|---|---|---|---|---|
| Physical properties of melt-kneaded product | Viscosity value VN | - | 133 | 133 | 132 | 133 |
| | Moisture content | ppm by mass | 709 | 727 | 601 | 711 |
| Water absorption treatment | Melt-kneaded product water absorption | - | no | no | no | no |
| | Moisture content after water absorption | % by mass melt-kneaded product | - | - | - | - |
| Heating step conditions | Amount of water added | % by mass melt-kneaded product | 0.5 | 0.5 | 0.5 | 0.5 |
| | Heating temperature (pellet temperature) | °C | 210 | 190 | 190 | 190 |
| | Heating time (hours) | hours | 9 | 6 | 6 | 6 |
| Physical properties after heating step | Viscosity value VN | - | 298 | 226 | 227 | 228 |
| | Weight average fiber length of glass fibers | μm | 396 | 411 | 312 | 396 |
| Evaluations | Pellet color tone (b value) | - | 8.99 | 8.51 | 8.34 | 8.55 |
| | molded article color tone (b value) | - | 4.87 | 4.19 | 4.23 | 4.51 |
| | Vibration fatigue resistance | $\times 10^5$ repetitions | 89.2 | 16.2 | 223.1 | 77.8 |
| | Abnormal noise during solid-phase polymerization | - | o | o | o | o |

[Table 27]

| Example | | | 3-9 | 3-10 |
|---|---|---|---|---|
| Physical properties of melt-kneaded product | Viscosity value VN | - | 133 | 182 |
| | Moisture content | ppm by mass | 718 | 692 |
| Water absorption treatment | Melt-kneaded product water absorption | - | no | no |
| | Moisture content after water absorption | % by mass melt-kneaded product | - | - |
| Heating step | Amount of water | % by mass | 0.5 | 0.5 |

(continued)

| Example | | | | 3-9 | 3-10 |
|---|---|---|---|---|---|
| conditions | added | melt-kneaded product | | | |
| | Heating temperature (pellet temperature) | °C | | 190 | 190 |
| | Heating time (hours) | hours | | 6 | 3 |
| Physical properties after heating step | Viscosity value VN | - | | 228 | 232 |
| | Weight average fiber length of glass fibers | μm | | 397 | 352 |
| Evaluations | Pellet color tone (b value) | - | | 8.12 | 7.92 |
| | molded article color tone (b value) | - | | 4.14 | 3.95 |
| | Vibration fatigue resistance | ×10$^5$ repetitions | | 80.9 | 70.9 |
| | Abnormal noise during solid-phase polymerization | - | | o | o |

[Table 28]

| Comparative Example | | | 3-1 | 3-2 | 3-3 | 3-4 |
|---|---|---|---|---|---|---|
| Physical properties of melt-kneaded product | Viscosity value VN | - | 133 | 133 | 132 | 133 |
| | Moisture content | ppm by mass | 709 | 709 | 715 | 735 |
| Water absorption treatment | Melt-kneaded product water absorption | - | no | no | no | no |
| | Moisture content after water absorption | % by mass melt-kneaded product | - | - | - | - |
| Heating step conditions | Amount of water added | % by mass melt-kneaded product | 0 | 0.01 | 0.5 | 0.5 |
| | Heating temperature (pellet temperature) | °C | 190 | 190 | 190 | 190 |
| | Heating time (hours) | hours | 6 | 6 | 6 | 6 |
| Physical properties after heating step | Viscosity value VN | - | 233 | 232 | 228 | 228 |
| | Weight average fiber length of glass fibers | μm | 397 | 397 | 309 | 425 |
| Evaluations | Pellet color tone (b value) | - | 12.05 | 11.85 | 8.87 | 8.29 |
| | molded article color tone (b value) | - | 6.77 | 6.12 | 4.34 | 4.59 |
| | Vibration fatigue resistance | ×10$^5$ repetitions | 12.2 | 14.7 | 11.0 | 9.9 |
| | Abnormal noise during solid-phase polymerization | - | × | Δ | × | o |

[Table 29]

| Comparative Example | | | 3-5 | 3-6 | 3-7 |
|---|---|---|---|---|---|
| Physical properties of melt-kneaded product | Viscosity value VN | - | 131 | 133 | 133 |
| | Moisture content | ppm by mass | | 741 | 744 |

(continued)

| Comparative Example | | | 3-5 | 3-6 | 3-7 |
|---|---|---|---|---|---|
| Water absorption treatment | Melt-kneaded product water absorption | - | no | no | no |
| | Moisture content after water absorption | % by mass melt-kneaded product | - | - | - |
| Heating step conditions | Amount of water added | % by mass melt-kneaded product | - | 0 | 0.5 |
| | Heating temperature (pellet temperature) | °C | - | 190 | 190 |
| | Heating time (hours) | hours | - | 6 | 6 |
| Physical properties after heating step | Viscosity value VN | - | - | 229 | 228 |
| | Weight average fiber length of glass fibers | $\mu$m | - | - | - |
| Evaluations | Pellet color tone (b value) | - | - | 11.90 | 8.22 |
| | molded article color tone (b value) | - | - | 6.21 | 4.16 |
| | Vibration fatigue resistance | $\times 10^5$ repetitions | - | 2.5 | 2.4 |
| | Abnormal noise during solid-phase polymerization | - | - | o | o |

Based on Table 25 to 27, it was evident that the polyamide resin compositions PA-a8 to PA-a17 (Examples 3-1 to 3-10) exhibited favorable results for all of the evaluations.

INDUSTRIAL APPLICABILITY

The fiber-reinforced polyamide resin composition of the first embodiment of the present invention and the molded article of the second embodiment exhibit excellent mechanical properties, reduced variation in the physical properties and excellent wear characteristics, and are therefore industrially applicable in the vehicle field, electrical and electronic fields, machinery and industrial fields, office equipment fields, and the aerospace field and the like.

The method for manufacturing a thermoplastic resin composition according to the third embodiment of the present invention yields a thermoplastic resin composition having excellent physical properties and manufacturing costs. The thermoplastic resin composition obtained according to this embodiment of the present invention can be used favorably, for example, in vehicle componentry, electrical and electronic components, industrial machinery components, and various types of gears and the like.

The method for manufacturing a thermoplastic resin composition according to the fourth embodiment of the present invention yields a thermoplastic resin composition having excellent color tone and vibration fatigue resistance. The thermoplastic resin composition obtained according to this embodiment of the present invention can be used favorably, for example, in vehicle componentry, electrical and electronic components, industrial machinery components, and various types of gears and the like.

**Claims**

1. A fiber-reinforced polyamide resin composition comprising a crystalline polyamide (A1) and glass fibers (B1), wherein

    a formic acid relative viscosity of the fiber-reinforced polyamide resin composition is 90 or higher,
    an insoluble component when the fiber-reinforced polyamide resin composition is dissolved in formic acid is 105% by mass or higher relative to an ash content of the fiber-reinforced polyamide resin composition, and
    within the glass fibers (B1) contained in the fiber-reinforced polyamide resin composition, a proportion of glass fibers having a fiber length of 250 $\mu$m or less is not more than 55%.

2. The fiber-reinforced polyamide resin composition according to Claim 1, wherein a number average fiber diameter of the glass fibers is at least 5 $\mu$m but not more than 9 $\mu$m.

3. The fiber-reinforced polyamide resin composition according to Claim 1, comprising at least 1 part by mass but not more than 100 parts by mass of the glass fibers (B1) per 100 parts by mass of the crystalline polyamide (A1).

4. The fiber-reinforced polyamide resin composition according to Claim 1, wherein the formic acid relative viscosity is 130 or higher.

5. A molded article obtained by molding the fiber-reinforced polyamide resin composition according to any one of Claims 1 to 4.

6. A sliding member formed from the fiber-reinforced polyamide resin composition according to any one of Claims 1 to 4.

7. The sliding member according to Claim 6, having a coefficient of variation for tensile strength measured in accordance with ISO 527 of 1.0 or less.

8. A gear formed from the fiber-reinforced polyamide resin composition according to any one of Claims 1 to 4.

9. A worm wheel formed from the fiber-reinforced polyamide resin composition according to any one of Claims 1 to 4.

10. A method for manufacturing a thermoplastic resin composition, the method comprising:

a melt-kneading step of adding at least 5 parts by mass but not more than 100 parts by mass of glass fibers having an average fiber diameter of at least 3 $\mu$m but not more than 15 $\mu$m per 100 parts by mass of a thermoplastic resin having a viscosity value RV of at least 25 but not more than 70, and then conducting melt-kneading to obtain a melt-kneaded product, and
a heating step of heating the melt-kneaded product at a temperature T represented by general formula (I) shown below to obtain a thermoplastic resin composition, wherein
the melt-kneaded product is composed of elliptical cylinder-shaped pellets, and a ratio a/b between a long diameter a and a short diameter b in a cross-section of the elliptical cylinder-shaped pellets is within a range from 1.3 to 3.0, and
the heating step involves conducting heating while stirring the elliptical cylinder-shaped pellets:

$$Tm\text{-}130°C \leq T \leq Tm\text{-}10°C \qquad\qquad (I)$$

(wherein Tm represents a melting point of the thermoplastic resin).

11. The method for manufacturing a thermoplastic resin composition according to Clam 10, wherein a viscosity value RV of the thermoplastic resin composition is at least 70 but not more than 400.

12. The method for manufacturing a thermoplastic resin composition according to Claim 10 or 11, wherein in the heating step, heating at the temperature T is conducted for at least 30 minutes but not more than 15 hours.

13. The method for manufacturing a thermoplastic resin composition according to Claim 10 or 11, wherein the thermoplastic resin is a polyamide or a polyester.

14. The method for manufacturing a thermoplastic resin composition according to Claim 13, wherein the polyamide is at least one type of polyamide selected from the group consisting of polyamide 6, polyamide 66, polyamide 46, polyamide 610 and polyamide 612.

15. The method for manufacturing a thermoplastic resin composition according to Claim 10 or 11, wherein in the heating step, heating at the temperature T is conducted in an inert gas atmosphere with an oxygen concentration of not more than 5 ppm.

16. The method for manufacturing a thermoplastic resin composition according to Claim 10 or 11, wherein in the heating step, heating at the temperature T is conducted in an inert gas atmosphere with a moisture concentration of not more than 10 ppm.

17. A method for manufacturing a thermoplastic resin composition, the method comprising:

a melt-kneading step of adding at least 5 parts by mass but not more than 100 parts by mass of glass fibers having an average fiber diameter of at least 3 μm but not more than 9 μm per 100 parts by mass of a thermoplastic resin having a viscosity value VN of at least 80 but not more than 200, and then conducting melt-kneading to obtain a melt-kneaded product, and

a heating step of heating the melt-kneaded product at a temperature T represented by general formula (I) shown below to obtain a thermoplastic resin composition, wherein

in the heating step, 0.05 to 1.0% by mass of water is included relative to 100% by mass of the melt-kneaded product obtained in the melt-kneading step:

$$Tm\text{-}130°C \leq T \leq Tm\text{-}10°C \qquad (I)$$

(wherein Tm represents a melting point of the thermoplastic resin).

18. The method for manufacturing a thermoplastic resin composition according to Claim 17, wherein a viscosity value VN of the thermoplastic resin composition is at least 200 but not more than 350.

19. The method for manufacturing a thermoplastic resin composition according to Claim 17 or 18, wherein an average fiber length of the glass fibers contained in the thermoplastic resin composition following the heating step is at least 100 μm but not more than 1,000 μm.

20. The method for manufacturing a thermoplastic resin composition according to Claim 17 or 18, wherein the average fiber diameter of the glass fibers is at least 4 μm but not more than 8 μm.

21. The method for manufacturing a thermoplastic resin composition according to Claim 17 or 18, wherein in the heating step, heating at the temperature T is conducted for at least 30 minutes but not more than 15 hours.

22. The method for manufacturing a thermoplastic resin composition according to Claim 17 or 18, wherein in the heating step, heating at the temperature T is conducted in an inert gas atmosphere with an oxygen concentration of not more than 5 ppm.

23. The method for manufacturing a thermoplastic resin composition according to Claim 17 or 18, wherein the thermoplastic resin is a polyamide or a polyester.

24. The method for manufacturing a thermoplastic resin composition according to Claim 23, wherein the polyamide is polyamide 6, polyamide 66 or polyamide 610.

25. The method for manufacturing a thermoplastic resin composition according to Claim 17 or 18, wherein the thermoplastic resin composition contains essentially no boron oxide.

<table>
<tr><td colspan="2" align="center">**INTERNATIONAL SEARCH REPORT**</td><td>International application No.<br><br>**PCT/JP2023/026115**</td></tr>
</table>

**A. CLASSIFICATION OF SUBJECT MATTER**

*C08L 77/00*(2006.01)i; *B29B 9/14*(2006.01)i; *B29B 9/16*(2006.01)i; *C08J 3/20*(2006.01)i; *C08J 5/04*(2006.01)i; *C08K 7/14*(2006.01)i; *C08K 7/20*(2006.01)i; *C08L 67/00*(2006.01)i; *C08L 77/06*(2006.01)i; *C08L 101/12*(2006.01)i; *F16C 33/20*(2006.01)i; *F16H 55/06*(2006.01)i

FI: C08L77/00; B29B9/14; B29B9/16; C08J3/20 CEZ; C08J3/20 B CER; C08J5/04; C08K7/14; C08K7/20; C08L67/00; C08L77/06; C08L101/12; F16C33/20 A; F16H55/06

According to International Patent Classification (IPC) or to both national classification and IPC

**B. FIELDS SEARCHED**

Minimum documentation searched (classification system followed by classification symbols)

C08L1/00-101/14; C08K3/00-13/08; B29B9/14-9/16; C08J3/00-3/28; 99/00; C08J5/04-5/10; 5/24; F16C33/20; F16H55/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-108539 A (ASAHI KASEI CHEMICALS CORP.) 20 June 2016 (2016-06-20)<br>entire text | 1-25 |
| A | JP 2015-199871 A (ASAHI KASEI CHEMICALS CORP.) 12 November 2015 (2015-11-12)<br>entire text | 1-25 |
| A | JP 2015-199873 A (ASAHI KASEI CHEMICALS CORP.) 12 November 2015 (2015-11-12)<br>entire text | 1-25 |
| A | JP 2000-129119 A (ASAHI CHEMICAL INDUSTRY CO., LTD.) 09 May 2000 (2000-05-09)<br>entire text | 1-25 |
| A | JP 2016-117817 A (ASAHI KASEI CHEMICALS CORP.) 30 June 2016 (2016-06-30)<br>entire text | 1-25 |
| A | JP 2004-182743 A (MITSUBISHI GAS CHEMICAL CO., INC.) 02 July 2004 (2004-07-02)<br>entire text | 1-25 |

☑ Further documents are listed in the continuation of Box C.      ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/026115**

**C.     DOCUMENTS CONSIDERED TO BE RELEVANT**

| Category* | Citation of document, with indication, where appropriate, of the relevant passages | Relevant to claim No. |
|---|---|---|
| E, A | JP 2023-120776 A (ASAHI KASEI KABUSHIKI KAISHA) 30 August 2023 (2023-08-30) entire text | 1-25 |

Form PCT/ISA/210 (second sheet) (January 2015)

INTERNATIONAL SEARCH REPORT
Information on patent family members

International application No.

**PCT/JP2023/026115**

| Patent document cited in search report | | | Publication date (day/month/year) | Patent family member(s) | | | Publication date (day/month/year) |
|---|---|---|---|---|---|---|---|
| JP | 2016-108539 | A | 20 June 2016 | US entire text | 2017/0114185 | A1 | |
| | | | | WO | 2015/156363 | A1 | |
| | | | | EP | 3130627 | A1 | |
| | | | | CN | 106164141 | A | |
| JP | 2015-199871 | A | 12 November 2015 | US entire text | 2017/0114185 | A1 | |
| | | | | WO | 2015/156363 | A1 | |
| | | | | EP | 3130627 | A1 | |
| | | | | CN | 106164141 | A | |
| JP | 2015-199873 | A | 12 November 2015 | US entire text | 2017/0114185 | A1 | |
| | | | | WO | 2015/156363 | A1 | |
| | | | | EP | 3130627 | A1 | |
| | | | | CN | 106164141 | A | |
| JP | 2000-129119 | A | 09 May 2000 | (Family: none) | | | |
| JP | 2016-117817 | A | 30 June 2016 | (Family: none) | | | |
| JP | 2004-182743 | A | 02 July 2004 | (Family: none) | | | |
| JP | 2023-120776 | A | 30 August 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022113784 A
- JP 2022122261 A
- JP 2022165824 A
- JP 2018197316 A
- JP 2016117817 A
- JP 2000198841 A
- JP 2016069515 A

- JP 2016014154 A
- JP 2017111055 A
- JP SHO62185747 A
- JP HEI01110558 A
- JP HEI0841246 A
- JP 2003083423 A
- JP 4321590 B